# EUROPEAN PATENT APPLICATION

(11) **EP 4 797 791 A1**
(43) Date of publication of application: **26.08.2026**
(21) Application number: 24884436.7
(22) Date of filing: 16.10.2024
(51) Int. Cl.: H04W 28/26

(54) **COMMUNICATION METHOD AND APPARATUS**

(30) Priority: 03.11.2023 CN 202311463013
(71) Applicant: HUAWEI TECHNOLOGIES CO., LTD., Shenzhen, Guangdong 518129 (CN)
(72) Inventor: ZHAO, Xian, Shenzhen, Guangdong 518129 (CN); XU, Ruiyue, Shenzhen, Guangdong 518129 (CN); LI, Xianming, Shenzhen, Guangdong 518129 (CN); CAO, Longyu, Shenzhen, Guangdong 518129 (CN)
(74) Representative: Gill Jennings & Every LLP
(86) International application number: PCT/CN2024/125294
(87) International publication number: WO 2025/092432

(57) **Abstract**

This application relates to the field of communication technologies, and provides a communication method and apparatus, to ensure network quality experienced by a terminal during movement. In the method, a management service consumer may send, to a first management service provider entity, a first message for requesting to ensure, based on a network performance requirement, communication service quality during movement along a first route within a first duration. The first management service provider entity may reserve, based on the first message, a network resource corresponding to the first route within the first duration, so that the terminal can use the network resource when moving along the first route within the first duration. In this way, communication service quality experienced by the terminal when the terminal moves along the first route within the first duration can be ensured.

## Description

This application claims priority to Chinese Patent Application No. 202311463013.8, filed with the China National Intellectual Property Administration on November 3, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

As coverage of wireless networks gradually increases, terminals can use the wireless networks during movement. In a movement process of a terminal, locations of the terminal and base stations change. For example, the terminal is far away from the base stations. In this case, network quality experienced by the terminal during movement cannot be ensured.

Therefore, how to ensure the network quality experienced by the terminal during the movement is a hot topic currently discussed.

### SUMMARY

Embodiments of this application provide a communication method and apparatus, to ensure network quality experienced by a terminal during movement.

To achieve the foregoing objective, this application uses the following technical solutions.

According to a first aspect, a communication method is provided. The method includes: A first management service provider entity receives a first message from a management service consumer, and obtains a network resource reservation policy based on the first message. The first management service provider entity triggers network resource configuration based on the network resource reservation policy. The first message is for requesting to ensure, based on a network performance requirement, communication service quality during movement along a first route within a first duration, the network resource reservation policy indicates a configuration mode of a reserved network resource, and a network resource configured in the configuration mode is capable of ensuring the communication service quality during the movement along the first route within the first duration.

It can be learned from the method according to the first aspect and a method according to a second aspect that, after receiving the first message of the management service consumer, the first management service provider entity may reserve, based on the first message, a network resource corresponding to the first route within the first duration, so that a terminal can use the network resource when moving along the first route within the first duration. In this way, communication service quality by the terminal when the terminal moves along the first route within the first duration can be ensured.

In a possible design scheme, the first message includes at least one of the following: information indicating the first duration or information indicating the first route. It may be understood that the management service consumer may flexibly determine a first region and the first duration based on an actual situation.

In a possible design scheme, the first message includes at least one of the following: a route planning indication, the network performance requirement, an evaluation granularity requirement, a slice identifier, a policy adjustment parameter, or an optimization stop condition, where the route planning indication indicates whether a moving route needs to be provided, the evaluation granularity requirement indicates a size of a plurality of grids included in a region that covers a route, the slice identifier indicates a network slice for reserving a network resource, the policy adjustment parameter indicates a parameter to be adjusted during update of a network resource reservation policy, and the optimization stop condition indicates a condition for stopping updating a network resource reservation policy. It may be understood that the network performance requirement may be a throughput requirement, a latency requirement, or the like, and may be set differently based on a specific situation. It may be further understood that the management service consumer may flexibly determine an evaluation mode, the evaluation granularity requirement, the network performance requirement, the policy adjustment parameter, or the optimization stop condition based on an actual situation.

In a possible design scheme, the method according to the first aspect further includes: The first management service provider entity sends, to the management service consumer based on the network resource reservation policy, a second message indicating the network resource reservation policy. To be specific, after obtaining the network resource reservation policy, the first management service provider entity may send the network resource reservation policy to the management service consumer to help the management service consumer obtain a related status of the reserved network resource, and may further notify the management service consumer that the network resource has been reserved.

Optionally, the second message includes at least one of the following: an identifier of the network resource reservation policy, a feature of the network resource reservation policy, or a service assurance satisfaction degree corresponding to the network resource reservation policy, where the service assurance satisfaction degree represents a degree of matching between network performance and the network performance requirement. This helps the management service consumer obtain related information of the network resource reservation policy, and helps the management service consumer perform a subsequent operation based on the related information of the network resource reservation policy, for example, select a to-be-applied policy from a plurality of policies included in the network resource reservation policy.

Optionally, the network resource reservation policy includes a plurality of policies, and that the first management service provider entity triggers the network resource configuration based on the network resource reservation policy includes: The first management service provider entity receives, from the management service consumer, a third message indicating a to-be-applied policy, where the to-be-applied policy is a policy selected from the network resource reservation policy. The first management service provider entity triggers the network resource configuration based on the to-be-applied policy. In other words, when the network resource reservation policy includes a plurality of policies, the management service consumer may determine a to-be-used policy from the plurality of policies. In this way, the determined to-be-applied policy can meet a requirement of the management service consumer, to provide a better service for the management service consumer.

In a possible design scheme, that the first management service provider entity obtains the network resource reservation policy based on the first message includes: The first management service provider entity obtains the network resource reservation policy from a second management service provider entity based on the first message. It may be understood that the first management service provider entity may obtain the network resource reservation policy from another entity (for example, the second management service provider entity), or the first management service provider entity may generate the network resource reservation policy. A specific obtaining manner is related to a setting of a management system. The first management service provider entity may flexibly select, based on a specific setting, the manner of obtaining the network resource reservation policy. This is not limited.

Optionally, that the first management service provider entity obtains the network resource reservation policy from the second management service provider entity based on the first message includes: The first management service provider entity sends a fourth message to the second management service provider entity based on the first message, where the fourth message is for requesting to determine the network resource reservation policy based on the network performance requirement. The first management service provider entity receives a fifth message from the second management service provider entity, where the fifth message indicates the network resource reservation policy. In other words, the first management service provider entity may obtain the network resource reservation policy by sending a request to the second management service provider entity.

Further, the fourth message specifically indicates a request for determining, based on the network performance requirement, a network resource reservation policy applicable to at least one network element, a service range of the at least one network element includes a first region, and the first region is a region in which the first route is located. It may be understood that the first management service provider entity may determine the at least one network element based on the information indicating the first route, and send the at least one network element to the second management service provider entity by using the fourth message, so that the second management service provider entity obtains the network resource reservation policy based on the at least one network element. In this way, the second management service provider entity does not need to determine the at least one network element based on the information indicating the first route, to reduce overheads of the second management service provider entity.

Further, the fourth message includes at least one of the following: the information indicating the first duration, region information, or information indicating the at least one network element, where the region information indicates a plurality of first grids included in the first region. It may be understood that the first management service provider entity may determine the at least one network element and the region information based on the information indicating the first route, and send the at least one network element and the region information to the second management service provider entity by using the fourth message, so that the second management service provider entity obtains the network resource reservation policy based on the at least one network element and the region information. In this way, the second management service provider entity does not need to determine the at least one network element and the region information based on the information indicating the first route, to reduce the overheads of the second management service provider entity.

Further, the region information includes at least one of the following: respective identifiers of the plurality of first grids, a size of the plurality of first grids, or respective locations of the plurality of first grids. In this way, the second management service provider entity can accurately construct, based on the region information, a network twin model for obtaining the network resource reservation policy.

Further, the fourth message includes at least one of the following: the network performance requirement, the slice identifier, a policy optimization indication, the policy adjustment parameter, or the optimization stop condition, where the slice identifier indicates a network slice for reserving a network resource, the policy optimization indication indicates to optimize a network resource reservation policy, the policy adjustment parameter indicates a parameter to be adjusted during update of a network resource reservation policy, and the optimization stop condition indicates a condition for stopping updating a network resource reservation policy. In this way, the second management service provider entity can obtain, based on each piece of information carried in the fourth message, a network resource reservation policy that is more practical.

Further, that the first management service provider entity sends the fourth message to the second management service provider entity based on the first message includes: The first management service provider entity obtains, based on the first message, at least one of the following information: the region information or the information indicating the at least one network element. The first management service provider entity sends the fourth message to the second management service provider entity based on the first message and the at least one of the following information. In this way, the second management service provider entity does not need to determine the at least one network element and/or the region information based on the information indicating the first route, to reduce the overheads of the second management service provider entity.

Further, the fifth message includes at least one of the following: the network resource reservation policy, the identifier of the network resource reservation policy, the feature of the network resource reservation policy, or the service assurance satisfaction degree corresponding to the network resource reservation policy, where the service assurance satisfaction degree represents the degree of matching between the network performance and the network performance requirement. It may be understood that the second management service provider entity may trigger the network resource configuration based on the network resource reservation policy. In addition, the second management service provider entity may forward each piece of information in the fifth message to the management service consumer, to help the management service consumer obtain the related information of the network resource reservation policy, and help the management service consumer perform the subsequent operation based on the related information of the network resource reservation policy, for example, select the to-be-applied policy from the plurality of policies included in the network resource reservation policy.

According to a second aspect, a communication method is provided. The method includes: A management service consumer sends a first message to a first management service provider entity. The management service consumer receives, from the first management service provider entity, a second message indicating a network resource reservation policy. The first message is for requesting to ensure, based on a network performance requirement, communication service quality during movement along a first route within a first duration, and the network resource reservation policy indicates a policy that is determined based on the network performance requirement and that is capable of ensuring the communication service resource experienced during the movement along the first route within the first duration.

In a possible design scheme, the first message includes at least one of the following: information indicating the first duration or information indicating the first route.

In a possible design scheme, the first message includes at least one of the following: a route planning indication, the network performance requirement, an evaluation granularity requirement, a slice identifier, a policy adjustment parameter, or an optimization stop condition, where the route planning indication indicates whether a moving route needs to be provided, the evaluation granularity requirement indicates a size of a plurality of grids included in a region that covers a route, the slice identifier indicates a network slice for reserving a network resource, the policy adjustment parameter indicates a parameter to be adjusted during update of a network resource reservation policy, and the optimization stop condition indicates a condition for stopping updating a network resource reservation policy.

In a possible design scheme, the second message includes at least one of the following: an identifier of the network resource reservation policy, a feature of the network resource reservation policy, or a service assurance satisfaction degree corresponding to the network resource reservation policy, where the service assurance satisfaction degree represents a degree of matching between network performance and the network performance requirement.

In a possible design scheme, the network resource reservation policy includes a plurality of policies, and the method according to the second aspect further includes: The management service consumer sends, to the first management service provider entity based on the second message, a third message indicating a to-be-applied policy, where the to-be-applied policy is a policy selected from the network resource reservation policy.

In addition, for technical effects of the method according to the second aspect, refer to the technical effects of the method according to the first aspect. Details are not described herein again.

According to a third aspect, a communication method is provided. The method includes: A second management service provider entity receives a fourth message from a first management service provider entity, and sends, to the first management service provider entity based on the fourth message, a fifth message indicating a network resource reservation policy. The fourth message is for requesting to determine the network resource reservation policy based on a network performance requirement, the network resource reservation policy indicates a configuration mode of a reserved network resource, and a network resource configured in the configuration mode is capable of ensuring communication service quality during movement along a first route within a first duration.

In a possible design scheme, the fourth message specifically indicates a request for determining, based on the network performance requirement, a network resource reservation policy applicable to at least one network element, a service range of the at least one network element includes a first region, and the first region is a region in which the first route is located.

Optionally, the fourth message includes at least one of the following: information indicating the first duration, region information, or information indicating the at least one network element, where the region information indicates a plurality of first grids included in the first region.

Further, the region information includes at least one of the following: respective identifiers of the plurality of first grids, a size of the plurality of first grids, or respective locations of the plurality of first grids.

Further, before that the second management service provider entity sends, to the first management service provider entity based on the fourth message, the fifth message indicating the network resource reservation policy, the method according to the third aspect further includes: The second management service provider entity constructs a network twin model based on the region information and the information indicating the at least one network element, and obtains the network resource reservation policy by using the network twin model based on the fourth message. In other words, the second management service provider entity may obtain the network resource reservation policy by using the network twin model. In this way, a network environment similar to an actual situation can be constructed by using the network twin model, so that the determined network resource reservation policy is more practical.

In a possible design scheme, the fourth message includes at least one of the following: the network performance requirement, a slice identifier, a policy optimization indication, a policy adjustment parameter, or an optimization stop condition, where the slice identifier indicates a network slice for reserving a network resource, the policy optimization indication indicates to optimize a network resource reservation policy, the policy adjustment parameter indicates a parameter to be adjusted during update of the network resource reservation policy, and the optimization stop condition indicates a condition for stopping updating the network resource reservation policy.

In a possible design scheme, the fifth message includes at least one of the following: the network resource reservation policy, an identifier of the network resource reservation policy, a feature of the network resource reservation policy, or a service assurance satisfaction degree corresponding to the network resource reservation policy, where the service assurance satisfaction degree represents a degree of matching between network performance and the network performance requirement.

In addition, for technical effects of the method according to the third aspect, refer to the technical effects of the method according to the first aspect. Details are not described herein again.

According to a fourth aspect, a communication method is provided. The method includes: A first management service provider entity receives a first message from a management service consumer. The first management service provider entity obtains a network resource reservation policy and a first route based on the first message. The first management service provider entity sends, to the management service consumer, a second message indicating the network resource reservation policy and the first route. The first management service provider entity triggers network resource configuration based on the network resource reservation policy. The first message is for requesting to provide a route from a first start point to a first end point, and ensure, based on a network performance requirement, communication service quality during movement along the route within a first duration. The network resource reservation policy indicates a configuration mode of a reserved network resource, a network resource configured in the configuration mode is capable of ensuring communication service quality during movement along the first route within the first duration, and the first route is a route from the first start point to the first end point.

It can be learned from the method according to the fourth aspect and a method according to a fifth aspect that, the management service consumer may send the first message to the first management service provider entity, to request to provide the route from the first start point to the first end point and ensure, based on the network performance requirement, the communication service quality during the movement along the route within the first duration. The first management service provider entity may obtain the first route based on the first message, and reserve a network resource corresponding to the first route within the first duration, so that a terminal can use the network resource when moving along the first route within the first duration. In this way, communication service quality experienced by the terminal when the terminal moves along the first route within the first duration can be ensured.

In a possible design scheme, the first message includes at least one of the following: information indicating the first duration, information indicating the first start point, or information indicating the first end point. It may be understood that the management service consumer may flexibly determine the first start point, the first end point, and the first duration based on an actual situation.

In a possible design scheme, the first message includes a route planning indication, the network performance requirement, an evaluation granularity requirement, a slice identifier, a policy adjustment parameter, an optimization stop condition, a passing point, a forbidden region, or a route preference, where the route planning indication indicates whether a moving route needs to be provided, the evaluation granularity requirement indicates a size of a plurality of grids included in a region that covers a route, the slice identifier indicates a network slice for reserving a network resource, the policy adjustment parameter indicates a parameter to be adjusted during update of a network resource reservation policy, the optimization stop condition indicates a condition for stopping updating a network resource reservation policy, the passing point indicates a place that needs to be passed through, and the forbidden region indicates a place or a region that cannot be passed through. It may be understood that the network performance requirement may be a throughput requirement, a latency requirement, or the like, and may be set differently based on a specific situation. It may be further understood that the management service consumer may flexibly determine an evaluation mode, the evaluation granularity requirement, the network performance requirement, the policy adjustment parameter, the optimization stop condition, the passing point, the forbidden region, or the route preference based on an actual situation.

In a possible design scheme, the second message includes at least one of the following: an identifier of the network resource reservation policy, a feature of the network resource reservation policy, the first route, an identifier of the first route, a service assurance satisfaction degree corresponding to the first route, or a feature of the first route, where the service assurance satisfaction degree is a degree of matching between network performance and the network performance requirement. In this way, related information of the first route and the network resource reservation policy corresponding to the first route can be sent to the management service consumer, so that the management service consumer may use the first route when the first route includes one route, and the management service consumer may determine, based on the related information of the first route and the network resource reservation policy when the first route includes a plurality of routes, a route and a policy that are to be used.

In a possible design scheme, the network resource reservation policy includes a plurality of policies, and that the first management service provider entity triggers the network resource configuration based on the network resource reservation policy includes: The first management service provider entity receives, from the management service consumer, a third message indicating a to-be-applied policy, where the to-be-applied policy is a policy selected from the network resource reservation policy. The first management service provider entity triggers the network resource configuration based on the to-be-applied policy. In other words, when the network resource reservation policy includes a plurality of policies, the management service consumer may determine a to-be-used policy from the plurality of policies. In this way, the determined to-be-applied policy can meet a requirement of the management service consumer, to provide a better service for the management service consumer.

In a possible design scheme, that the first management service provider entity obtains the network resource reservation policy and the first route based on the first message includes: The first management service provider entity obtains the network resource reservation policy and the first route from a second management service provider entity based on the first message. It may be understood that the first management service provider entity may obtain the network resource reservation policy and the first route from another entity (for example, the second management service provider entity), or the first management service provider entity may autonomously generate the network resource reservation policy and the first route. A specific obtaining manner is related to a setting of a management system. The first management service provider entity may flexibly select, based on a specific setting, the manner of obtaining the network resource reservation policy and the first route. This is not limited.

Optionally, that the first management service provider entity obtains the network resource reservation policy and the first route from the second management service provider entity based on the first message includes: The first management service provider entity sends a fourth message to the second management service provider entity based on the first message, where the fourth message is for requesting to provide the route from the first start point to the first end point and determine the network resource reservation policy based on the network performance requirement. The first management service provider entity receives a fifth message from the second management service provider entity, where the fifth message indicates the network resource reservation policy and the first route. In other words, the first management service provider entity may obtain the network resource reservation policy and the first route by sending a request to the second management service provider entity.

Further, the fourth message specifically indicates a request for providing the route from the first start point to the first end point and determining, based on the network performance requirement, a network resource reservation policy applicable to at least one network element, a service range of the at least one network element includes a first region, and the first region includes the first start point and the first end point. It may be understood that the first management service provider entity may determine the at least one network element based on the information indicating the first start point and the information indicating the first end point, and send the at least one network element to the second management service provider entity by using the fourth message, so that the second management service provider entity obtains the network resource reservation policy based on the at least one network element. In this way, the second management service provider entity does not need to determine the at least one network element based on information indicating the first route, to reduce overheads of the second management service provider entity.

Further, the fourth message includes at least one of the following: the information indicating the first start point, the information indicating the first end point, region information, information indicating the at least one network element, or the information indicating the first duration, where the region information indicates a plurality of first grids included in the first region. In this way, the second management service provider entity does not need to determine the at least one network element and the region information based on the information indicating the first start point and the information indicating the first end point, to reduce the overheads of the second management service provider entity.

Further, the region information includes at least one of the following: respective identifiers of the plurality of first grids, a size of the plurality of first grids, or respective locations of the plurality of first grids. In this way, the second management service provider entity can accurately construct, based on the region information, a network twin model for obtaining the network resource reservation policy.

Further, the fourth message includes at least one of the following: the network performance requirement, the slice identifier, a policy optimization indication, the policy adjustment parameter, the optimization stop condition, the passing point, the forbidden region, or the route preference, where the route planning indication indicates whether a moving route needs to be provided, the slice identifier indicates a network slice for reserving a network resource, the policy optimization indication indicates to optimize a network resource reservation policy, the policy adjustment parameter indicates a parameter to be adjusted during update of a network resource reservation policy, the optimization stop condition indicates a condition for stopping updating a network resource reservation policy, the passing point indicates a place that needs to be passed through in a region, and the forbidden region indicates a place or a region that cannot be passed through in a region. In this way, the second management service provider entity can obtain, based on each piece of information carried in the fourth message, a network resource reservation policy and a first route that are more practical.

Further, that the first management service provider entity sends the fourth message to the second management service provider entity based on the first message includes: The first management service provider entity obtains, based on the first message, at least one of the following information: the region information or the information indicating the at least one network element. The first management service provider entity sends the fourth message to the second management service provider entity based on the first message and the at least one of the following information. In this way, the second management service provider entity does not need to determine the at least one network element and/or the region information based on the information indicating the first start point and the information indicating the first end point, to reduce the overheads of the second management service provider entity.

Further, the fifth message includes at least one of the following: the network resource reservation policy, the identifier of the network resource reservation policy, the feature of the network resource reservation policy, the first route, the identifier of the first route, the service assurance satisfaction degree corresponding to the first route, or the feature of the first route, where the service assurance satisfaction degree is the degree of matching between the network performance and the network performance requirement. It may be understood that the second management service provider entity may trigger the network resource configuration based on the network resource reservation policy. In addition, the second management service provider entity may forward each piece of information in the fifth message to the management service consumer, to help the management service consumer obtain the related information of the first route and the network resource reservation policy, and help the management service consumer perform a subsequent operation based on the related information of the first route and the network resource reservation policy, for example, select the to-be-applied policy from the plurality of policies included in the network resource reservation policy.

According to a fifth aspect, a communication method is provided. The method includes: A management service consumer sends a first message to a first management service provider entity. The management service consumer receives, from the first management service provider entity, a second message indicating a network resource reservation policy and a first route. The first message is for requesting to provide a route from a first start point to a first end point and ensure, based on a network performance requirement, communication service quality during movement along the route. The network resource reservation policy indicates a policy that is determined based on the network performance requirement and that is capable of ensuring a communication service resource experienced during movement along the first route within a first duration, and the first route is a route from the first start point to the first end point.

In a possible design scheme, the first message includes at least one of the following: information indicating the first duration, information indicating the first start point, or information indicating the first end point.

In a possible design scheme, the first message includes at least one of the following: a route planning indication, the network performance requirement, an evaluation granularity requirement, a slice identifier, a policy adjustment parameter, an optimization stop condition, a passing point, a forbidden region, or a route preference, where the route planning indication indicates whether a moving route needs to be provided, the evaluation granularity requirement indicates a size of a plurality of grids included in a region that covers a route, the slice identifier indicates a network slice for reserving a network resource, the policy adjustment parameter indicates a parameter to be adjusted during update of a network resource reservation policy, the optimization stop condition indicates a condition for stopping updating a network resource reservation policy, the passing point indicates a place that needs to be passed through, and the forbidden region indicates a place or a region that cannot be passed through.

In a possible design scheme, the second message includes at least one of the following: an identifier of the network resource reservation policy, a feature of the network resource reservation policy, the first route, an identifier of the first route, a service assurance satisfaction degree corresponding to the first route, or a feature of the first route, where the service assurance satisfaction degree is a degree of matching between network performance and the network performance requirement.

In a possible design scheme, the network resource reservation policy includes a plurality of policies, and the method according to the fifth aspect further includes: The management service consumer sends, to the first management service provider entity based on the second message, a third message indicating a to-be-applied policy, where the to-be-applied policy is a policy selected from the network resource reservation policy.

In addition, for technical effects of the method according to the fifth aspect, refer to the technical effects of the method according to the fourth aspect. Details are not described herein again.

According to a sixth aspect, a communication method is provided. The method includes: A second management service provider entity receives a fourth message from a first management service provider entity. The second management service provider entity sends, to the first management service provider entity based on the fourth message, a fifth message indicating a network resource reservation policy and a first route. The fourth message is for requesting to provide a route from a first start point to a first end point and determine the network resource reservation policy based on a network performance requirement. The network resource reservation policy indicates a configuration mode of a reserved network resource, a network resource configured in the configuration mode is capable of ensuring communication service quality during movement along the first route within a first duration, and the first route is a route from the first start point to the first end point.

In a possible design scheme, the fourth message specifically indicates a request for providing the route from the first start point to the first end point and determining, based on the network performance requirement, a network resource reservation policy applicable to at least one network element, a service range of the at least one network element includes a first region, and the first region is a region in which the route is located.

Optionally, the fourth message includes at least one of the following: information indicating the first start point, information indicating the first end point, region information, information indicating the at least one network element, or information indicating the first duration, where the region information indicates a plurality of first grids included in the first region.

Further, the region information includes at least one of the following: respective identifiers of the plurality of first grids, a size of the plurality of first grids, or respective locations of the plurality of first grids.

Further, before that the second management service provider entity sends, to the first management service provider entity based on the fourth message, the fifth message indicating the network resource reservation policy and the first route, the method according to the sixth aspect further includes: The second management service provider entity constructs a network twin model based on the region information and the information indicating the at least one network element. The second management service provider entity obtains the network resource reservation policy and the first route by using the network twin model based on the fourth message.

In a possible design scheme, the fourth message includes at least one of the following: the network performance requirement, a slice identifier, a policy optimization indication, a policy adjustment parameter, an optimization stop condition, a passing point, a forbidden region, or a route preference, where a route planning indication indicates whether a moving route needs to be provided, the slice identifier indicates a network slice for reserving a network resource, the policy optimization indication indicates to optimize a network resource reservation policy, the policy adjustment parameter indicates a parameter to be adjusted during update of a network resource reservation policy, the optimization stop condition indicates a condition for stopping updating a network resource reservation policy, the passing point indicates a place that needs to be passed through in a region, and the forbidden region indicates a place or a region that cannot be passed through in a region.

In a possible design scheme, the fifth message includes at least one of the following: the network resource reservation policy, an identifier of the network resource reservation policy, a feature of the network resource reservation policy, the first route, an identifier of the first route, a service assurance satisfaction degree corresponding to the first route, or a feature of the first route, where the service assurance satisfaction degree is a degree of matching between network performance and the network performance requirement.

In addition, for technical effects of the method according to the sixth aspect, refer to the technical effects of the method according to the fourth aspect. Details are not described herein again.

According to a seventh aspect, a communication method is provided. The method includes: A first management service provider entity performs the method according to the first aspect, and a management service consumer performs the method according to the second aspect. Alternatively, a first management service provider entity performs the method according to the first aspect, a management service consumer performs the method according to the second aspect, and a second management service provider entity performs the method according to the third aspect.

According to an eighth aspect, a communication method is provided. The method includes: A first management service provider entity performs the method according to the fourth aspect, and a management service consumer performs the method according to the fifth aspect. Alternatively, a first management service provider entity performs the method according to the fourth aspect, a management service consumer performs the method according to the fifth aspect, and a second management service provider entity performs the method according to the sixth aspect.

According to a ninth aspect, a communication apparatus is provided. The communication apparatus includes a module configured to perform the method according to any one of the first aspect to the sixth aspect, for example, a transceiver module and a processing module. For example, the transceiver module is configured to perform receiving and sending functions of the communication apparatus, and the processing module is configured to perform a function of the communication apparatus other than the receiving and sending functions.

Optionally, the transceiver module may include a sending module and a receiving module. The sending module is configured to implement the sending function of the communication apparatus according to the ninth aspect, and the receiving module is configured to implement the receiving function of the communication apparatus according to the ninth aspect.

Optionally, the communication apparatus according to the ninth aspect may further include a storage module. The storage module stores a program or instructions. When the processing module executes the program or the instructions, the communication apparatus is caused to perform the method according to any one of the first aspect to the sixth aspect.

It may be understood that the communication apparatus according to the ninth aspect may be a terminal, for example, a remote device, may be a chip (system) or another part or component that may be disposed in the terminal, or may be an apparatus that includes the terminal. This is not limited in this application.

In addition, for technical effects of the communication apparatus according to the ninth aspect, refer to the technical effects of the method according to any one of the implementations of the first aspect to the sixth aspect. Details are not described herein again.

According to a tenth aspect, a communication apparatus is provided. The communication apparatus includes a processor. When the processor executes computer instructions, the communication apparatus is caused to perform the method according to any one of the possible implementations of the first aspect to the sixth aspect.

In a possible design scheme, the communication apparatus according to the tenth aspect may further include a transceiver. The transceiver may be a transceiver circuit or an interface circuit. The transceiver may be used by the communication apparatus according to the tenth aspect to communicate with another communication apparatus.

In a possible design scheme, the communication apparatus according to the tenth aspect may further include a memory. The memory and the processor may be integrated together, or may be disposed separately. The memory may be configured to store a computer program and/or data related to the method according to either of the first aspect and the sixth aspect.

In embodiments of this application, the communication apparatus according to the tenth aspect may be the terminal or a network apparatus according to either of the first aspect and the sixth aspect, a chip (system) or another part or component that may be disposed in the terminal or the network apparatus, or an apparatus that includes the terminal or the network apparatus.

In addition, for technical effects of the communication apparatus according to the tenth aspect, refer to the technical effects of the method according to any one of the implementations of the first aspect or the sixth aspect. Details are not described herein again.

According to an eleventh aspect, a communication apparatus is provided. The communication apparatus includes a processor. The processor is coupled to a memory, and the processor is configured to execute a computer program stored in the memory, to cause the communication apparatus to perform the method according to any one of the possible implementations of the first aspect or the sixth aspect.

In a possible design scheme, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In embodiments of this application, the communication apparatus according to the eleventh aspect may be the terminal or a network apparatus according to either of the first aspect and the sixth aspect, a chip (system) or another part or component that may be disposed in the terminal or the network apparatus, or an apparatus that includes the terminal or the network apparatus.

In addition, for technical effects of the communication apparatus according to the eleventh aspect, refer to the technical effects of the method according to any one of the implementations of the first aspect or the sixth aspect. Details are not described herein again.

According to a twelfth aspect, a communication apparatus is provided, including a processor and a memory, where the memory is configured to store a computer program; and when the processor executes the computer program, the communication apparatus is caused to perform the method according to any one of the implementations of the first aspect or the sixth aspect.

In a possible design scheme, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In embodiments of this application, the communication apparatus according to the twelfth aspect may be the terminal or a network apparatus according to either of the first aspect and the sixth aspect, a chip (system) or another part or component that may be disposed in the terminal or the network apparatus, or an apparatus that includes the terminal or the network apparatus.

In addition, for technical effects of the communication apparatus according to the twelfth aspect, refer to the technical effects of the method according to any one of the implementations of the first aspect or the sixth aspect. Details are not described herein again.

According to a thirteenth aspect, a communication chip is provided. The communication chip stores instructions; and when the chip runs on a communication device, the method according to any one of the implementations of the first aspect or the sixth aspect is implemented.

According to a fourteenth aspect, a communication chip is provided. The communication chip includes a logic circuit and a communication interface. The logic circuit is configured to execute computer instructions, and the communication interface is used by the communication chip to communicate with another apparatus or chip. When the logic circuit executes the computer instructions, the method according to any one of the implementations of the first aspect or the sixth aspect is implemented.

According to a fifteenth aspect, a communication system is provided. The communication system includes a first management service provider entity configured to perform the method according to the first aspect and a management service consumer configured to perform the method according to the second aspect.

According to a sixteenth aspect, a communication system is provided. The communication system includes a first management service provider entity configured to perform the method according to the first aspect, a management service consumer configured to perform the method according to the second aspect, and a second management service provider entity configured to perform the method according to the third aspect.

According to a seventeenth aspect, a communication system is provided. The communication system includes a first management service provider entity configured to perform the method according to the fourth aspect and a management service consumer configured to perform the method according to the fifth aspect.

According to an eighteenth aspect, a communication system is provided. The communication system includes a first management service provider entity configured to perform the method according to the fourth aspect, a management service consumer configured to perform the method according to the fifth aspect, and a second management service provider entity configured to perform the method according to the sixth aspect.

According to a nineteenth aspect, a computer-readable storage medium is provided, and includes a computer program or instructions. When the computer program or the instructions are run on a computer, the computer is caused to perform the method according to any one of the possible implementations of the first aspect or the sixth aspect.

According to a twentieth aspect, a computer program product is provided, and includes a computer program or instructions. When the computer program or the instructions are run on a computer, the computer is caused to perform the method according to any one of the possible implementations of the first aspect or the sixth aspect.

### BRIEF DESCRIPTION OF DRAWINGS

FIG. 1 is a diagram of an architecture of a network system according to an embodiment of this application;
FIG. 2 is a diagram of a flight route of an uncrewed aerial vehicle according to an embodiment of this application;
FIG. 3 is a diagram of an architecture of a communication system according to an embodiment of this application;
FIG. 4 is a schematic flowchart 1 of a communication method according to an embodiment of this application;
FIG. 5 is a diagram 1 of determining a first region based on a first route according to an embodiment of this application;
FIG. 6 is a diagram 2 of determining a first region based on a first route according to an embodiment of this application;
FIG. 7 is a diagram of updating a network resource reservation policy according to an embodiment of this application;
FIG. 8 is a schematic flowchart 2 of a communication method according to an embodiment of this application;
FIG. 9 is a schematic flowchart 3 of a communication method according to an embodiment of this application;
FIG. 10 is a schematic flowchart 4 of a communication method according to an embodiment of this application;
FIG. 11 is a schematic flowchart 5 of a communication method according to an embodiment of this application;
FIG. 12 is a schematic flowchart 6 of a communication method according to an embodiment of this application;
FIG. 13 is a diagram of determining a route based on a plurality of first grids according to an embodiment of this application;
FIG. 14 is a schematic flowchart 7 of a communication method according to an embodiment of this application;
FIG. 15 is a schematic flowchart 8 of a communication method according to an embodiment of this application;
FIG. 16 is a diagram 1 of a structure of a communication apparatus according to an embodiment of this application; and
FIG. 17 is a diagram 2 of a structure of a communication apparatus according to an embodiment of this application.

### DESCRIPTION OF EMBODIMENTS

For ease of understanding, technical terms in embodiments of this application are first described below.

### 1. Network system

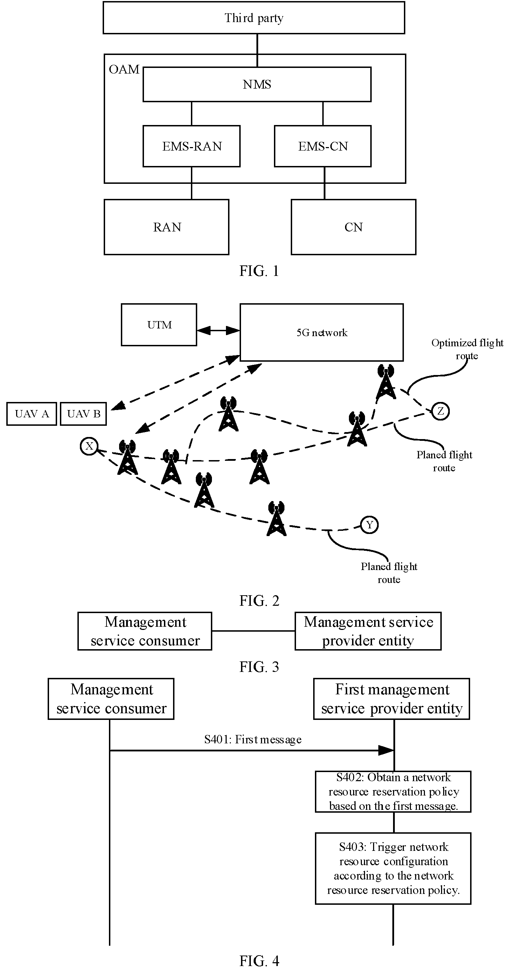

FIG. 1 is a diagram of an architecture of a network system. As shown in FIG. 1, the architecture of the network system includes a third party, an operations, administration and maintenance (operations, administration and maintenance, OAM), a radio access network (radio access network, RAN) network element, and a core network (core network, CN) network element.

The third party may also be referred to as a third-party management controller or a third-party management system, and may be configured to manage and control a terminal. For example, the third party may be an unmanned aircraft system traffic management (unmanned aircraft system traffic management, UTM), an unmanned aerial vehicle (unmanned aerial vehicle, UAV) operator, or an uncrewed aerial system (uncrewed aerial system, UAS).

The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal device, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a function of the terminal, or the like. The terminal device in this application may alternatively be a vehicle-mounted module, a vehicle-mounted assembly, a vehicle-mounted component, a vehicle-mounted chip, or a vehicle-mounted unit that is built as one or more components or units in a vehicle. The terminal device may alternatively be another device having a function of the terminal device. For example, the terminal device may alternatively be a device that functions as the terminal device in D2D communication.

A form of the terminal device is not limited in embodiments of this application. An apparatus for implementing the function of the terminal device may be a terminal device, or may be an apparatus, for example, a chip system, that can support the terminal device to implement the function. The apparatus may be mounted in the terminal device or used in collaboration with the terminal device. In embodiments of this application, the chip system may include a chip, or may include a chip and another discrete component.

For example, when an uncrewed aerial vehicle uses a 3rd generation partnership project (3rd generation partnership project, 3GPP) network as an access type, the UTM (or the UAV operator or the UAS) may need to determine a network status by relying on the 3GPP network, to perform flight path scheduling. A 5G system may assist the UTM or the UAV operator in providing an alternative flight path or reconfiguring a network resource based on quality of service (quality of service, QoS) supported in a specific region, to achieve the needed QoS.

For example, as shown in FIG. 2, a company #1 plans to use an uncrewed aerial vehicle A to perform video detection on a pipeline from X to Y, and a company #2 uses an uncrewed aerial vehicle B for express delivery from X to Z. The uncrewed aerial vehicle A and the uncrewed aerial vehicle B are registered with a 5G network, and may communicate with the UTM via the 5G network. The UTM obtains planned flight route information, such as the start point X, the end point Y, and needed quality of experience (quality of experience, QoE), of the uncrewed aerial vehicle A. The UTM and the 5G system determine QoS information, such as end-to-end latency and quality of experience (quality of experience, QoE), needed by an uncrewed aerial vehicle service along a flight route. Based on available analysis information, the 5G system may ensure that quality of service on a flight path of the uncrewed aerial vehicle A meets a requirement, may reconfigure a network resource to provide needed QoS for the uncrewed aerial vehicle A along a flight path, or may replan a route for the uncrewed aerial vehicle A to achieve better service assurance. The UTM (or the UAS) determines a final flight route based on information fed back by the 5G network, and notifies the uncrewed aerial vehicle A of the final flight route. The uncrewed aerial vehicle A receives flight path information from the UTM (or the UAS) via the 5G system, and starts a flight mission.

The OAM network element is configured to complete routine analysis, prediction, planning, and configuration work on a network and a service, and perform routine operation activities such as testing and fault management on the network and the service of the network. The OAM network element includes a network management system (network management system, NMS), a single-domain management system (domain management system, EMS)-RAN, and an EMS-CN. The NMS may also be referred to as a cross-domain management system (cross-domain management system), and may manage a plurality of single-domain management systems. An EMS may manage a single-domain network element, for example, the RAN network element and the CN network element.

The RAN may be a device that provides access for the terminal device. For example, the RAN device may include an access network device, for example, a 6G base station, in a next generation mobile communication system like 6G. Alternatively, in a next generation mobile communication system, the network device may be named in another manner that falls within the protection scope of embodiments of this application. This is not limited in this application. Alternatively, the RAN device may include a gNB in 5G, for example, a new radio (new radio, NR) system, or one antenna panel or a group of antenna panels (including a plurality of antenna panels) of a base station in 5G, or may be a network node, for example, a baseband unit (baseband unit, BBU), a central unit (central unit, CU), a distributed unit (distributed unit, DU), or an RSU having a function of a base station, that is included in a gNB, a transmission point (transmission reception point, TRP, or transmission point, TP), or a transmission measurement function (transmission measurement function, TMF), a wired access gateway, or a 5G core network. Alternatively, the RAN device may include an access point (access point, AP), a wireless relay node, a wireless backhaul node, macro base stations in various forms, a micro base station (also referred to as a small cell), a relay station, an access point, a wearable device, a vehicle-mounted device, or the like in a wireless fidelity (wireless fidelity, Wi-Fi) system.

The CN is mainly responsible for maintaining subscription data of a mobile network, and providing session management, mobility management, policy management, security authentication, and the like for the terminal device. The CN mainly includes a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), a unified data management (unified data management, UDM), a unified data repository (unified data repository, UDR), an application function (application function, AF), and a sensing function (sensing function, SF).

As coverage of wireless networks gradually increases, terminals can use the wireless networks during movement. In a movement process of a terminal, locations of the terminal and base stations change. For example, the terminal is far away from the base stations. In this case, network quality experienced by the terminal during movement cannot be ensured.

Therefore, how to ensure the network quality experienced by the terminal during the movement is a hot topic currently discussed.

For the foregoing technical problem, embodiments of this application provide the following technical solutions, to ensure network quality experienced by a terminal during movement.

The following describes the technical solutions in this application with reference to the accompanying drawings.

The technical solutions in embodiments of this application may be applied to various communication systems, for example, 4th generation (4th generation, 4G) mobile communication systems such as a long term evolution (long term evolution, LTE) system, 5th generation (5th generation, 5G) mobile communication systems such as a new radio (new radio, NR) system, and communication systems evolved after 5G, such as a 6th generation (6th generation, 6G) mobile communication system, or may be applied to a wireless fidelity (wireless fidelity, Wi-Fi) system, a vehicle to everything (vehicle to everything, V2X) communication system, a device-to-device (device-to-device, D2D) communication system, an Internet of vehicles communication system, and the like.

All aspects, embodiments, or features are presented in this application by describing a system that may include a plurality of devices, components, modules, or the like. It should be appreciated and understood that, each system may include another device, component, module, or the like, and/or may not include all devices, components, modules, or the like discussed with reference to the accompanying drawings. In addition, a combination of these solutions may be used.

In addition, in embodiments of this application, terms such as "for example" and "such as" represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "corresponding, relevant (corresponding, relevant)", and "corresponding (corresponding)" may sometimes be interchangeably used. It should be noted that meanings expressed by the terms are consistent when differences of the terms are not emphasized. In addition, "/" in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to similar technical problems.

For ease of understanding embodiments of this application, a communication system shown in FIG. 3 is first used as an example to describe in detail a communication system usable in embodiments of this application. For example, FIG. 3 is a diagram of an architecture of a communication system usable in communication methods according to embodiments of this application.

The communication system includes a management service consumer and a first management service provider entity. The management service consumer is an invoker of a management service, and may request to invoke a management service provided by a management service provider entity. The first management service provider entity is responsible for providing a management service, and receiving a request from the management service consumer. The communication system may be used in the foregoing architecture of the management system. In this case, the management service consumer may be the third-party management system, and the first management service provider entity may be deployed on the EMS-RAN and the EMS-CN, or deployed on the NMS.

Optionally, the communication system may further include a second management service provider entity. The second management service provider entity may provide a management service, for example, simulating a region by establishing a network twin model, and previewing a management policy on the network twin model, to evaluate service assurance satisfaction degrees in the region under different management policies. A simulated object may include a regional environment, for example, a block structure, weather, or a building, a regional network, a communication device that provides a network for the region, and the like. In this case, the management service consumer may be the third-party management system, and the second management service provider entity may be deployed on the NMS, the EMS-RAN, and the EMS-CN.

It may be understood that, as shown in FIG. 3, when the communication system includes the management service consumer and the first management service provider entity, the first management service provider entity may be the management service provider entity in FIG. 3. When the communication system includes the management service consumer, the first management service provider entity, and the second management service provider entity, the management service consumer and the first management service provider entity may respectively correspond to the management service consumer and the management service provider entity in FIG. 3; and the first management service provider entity and the second management service provider entity may also respectively correspond to the management service consumer and the management service provider entity in FIG. 3, in other words, the first management service provider entity is a management service consumer of the second management service provider entity.

It may be further understood that the "management service consumer" in embodiments of this application is merely a description example, and the "management service consumer" may alternatively be replaced with any possible description, for example, the "third party" or the "third-party management system". This is not limited. The "management service provider entity" in embodiments of this application is merely a description example, and the "management service provider entity" may alternatively be replaced with any possible description, for example, a "service assurance service provider" or a "management service provider". This is not limited.

In the communication system, the management service consumer may send, to the first management service provider entity, a first message for requesting to ensure, based on a network performance requirement, communication service quality during movement along a first route within a first duration, so that the first management service provider entity configures a network resource by triggering configuration of a network resource reservation policy, and a terminal can use the network resource when moving along the first route within the first duration. In this way, network quality experienced by the terminal during the movement can be ensured.

It may be understood that FIG. 3 is a simplified diagram used as an example for ease of understanding. The communication system may further include another network device and/or another terminal device that are/is not shown in FIG. 3.

For ease of understanding, the following specifically describes, with reference to FIG. 4, the communication method provided in embodiments of this application.

For example, FIG. 4 is a schematic flowchart of a communication method according to an embodiment of this application. The method may be applied to communication between the management service consumer and the first management service provider entity in the foregoing communication system.

As shown in FIG. 4, a procedure for the communication method is as follows:
S401: The management service consumer sends a first message to the first management service provider entity. Correspondingly, the first management service provider entity receives the first message from the management service consumer.

The first message is for requesting to ensure, based on a network performance requirement, communication service quality during movement along a first route within a first duration.

The network performance requirement is a requirement, for example, a throughput requirement or a latency requirement, of the management service consumer on network performance of a communication service performed when a terminal moves. The first duration is duration for which the communication service quality needs to be ensured, and may be duration for which the terminal is predicted to move, or may include the duration for which the terminal is predicted to move. For example, if the duration for which the terminal is predicted to move is 9:00 to 10:00, the first duration may be 9:00 to 10:00, 8:00 to 10:00, or 8:30 to 10:00. The first duration may be flexibly set based on an actual situation. This is not limited. The first route is a route on which the terminal is predicted to move, and specifically, may be flexibly set based on an actual situation. This is not limited. It may be understood that the terminal in this embodiment of this application is a terminal that may be managed by the management service consumer.

Optionally, the first message may include at least one of the following: information indicating the first duration or information indicating the first route.

The information indicating the first duration may include a start time point and an end time point. For example, if duration for evaluating a service assurance satisfaction degree in a first region is 14:00 to 15:00, the information indicating the first duration includes the start time point 14:00 and the end time point 15:00. Alternatively, the information indicating the first duration may include a start time point and an evaluation time period. Still using the example, in this case, the information indicating the first duration includes the start time point 14:00 and an evaluation time period being 1 hour (h).

The information indicating the first route may include a plurality of coordinate points, in other words, the first route includes a plurality of coordinate points. For example, the plurality of coordinate points are sequentially connected to obtain the first route. Alternatively, the information indicating the first route may be a bit value corresponding to a route agreed on by the management service consumer and the first management service provider entity. For example, a route #1, a route #2, a route #3, and a route #4 are preset in the first management service provider entity, and the route #1 to the route #4 respectively correspond to bits 00, 01, 10, and 11. If the first route is the route #1, the information indicating the first route is 00. The information indicating the first route may alternatively be represented in another manner. This is not limited.

The management service consumer may flexibly determine the first duration and/or the first region based on an actual situation, and send the first duration and/or the first region to the first management service provider entity, to help the first management service provider entity reserve a network resource based on the first duration and/or the first region. It may be understood that, when the first duration or the first region is preset in the first management service provider entity, the first message may not include the information indicating the first duration or the information indicating the first route. In other words, if the first message does not include the information indicating the first duration or the information indicating the first route, it may indicate that the information indicating the first duration or the information indicating the first route has been preset in the first management service provider entity.

Optionally, the first message may include at least one of the following: a route planning indication, the network performance requirement, an evaluation granularity requirement, a slice identifier, a policy adjustment parameter, or an optimization stop condition.

The route planning indication may indicate whether a moving route needs to be provided. To be specific, when the moving route needs to be provided, the route planning indication may indicate that the moving route needs to be provided; or when the moving route does not need to be provided, the route planning indication may indicate that the moving route does not need to be provided. The route planning indication may alternatively indicate that a moving route needs to be provided. To be specific, when the message includes the route planning indication, it indicates that the moving route needs to be provided; or when the message does not include the route planning indication, it indicates that the moving route does not need to be provided.

It may be understood that when the route planning indication indicates whether the moving route needs to be provided, different bits may indicate different cases of the route planning indication. For example, a bit 0 indicates that the moving route needs to be provided, and a bit 1 indicates that the moving route does not need to be provided. To be specific, when a parameter value of an information element that is in the first message and that indicates the route planning indication is 0, it may indicate that the moving route needs to be provided; or when a parameter value of an information element that is in the first message and that indicates the route planning indication is 1, it may indicate that the moving route does not need to be provided.

It may be further understood that, in this embodiment of this application, the route planning indication indicates that the moving route does not need to be provided. Therefore, when the route planning indication indicates whether the moving route needs to be provided, the first message includes the route planning indication indicating that the moving route does not need to be provided. In addition, when receiving the first message including the route planning indication, the first management service provider entity may determine, based on the route planning indication, that the moving route does not need to be provided. Alternatively, when the route planning indication indicates that the moving route needs to be provided, the first message does not include the route planning indication. In addition, when receiving the first message, the first management service provider entity may determine, based on that the first message does not include the route planning indication, that the moving route does not need to be provided. When determining that the moving route does not need to be provided, the first management service provider entity may reserve the network resource for the management service consumer, to ensure network quality experienced by the terminal during the movement.

For the network performance requirement, refer to the foregoing related descriptions. Details are not described herein again.

The evaluation granularity requirement indicates a size of a plurality of grids included in a region that covers a route. For example, when the route is a route in a plane region, the evaluation granularity requirement may be a length and a width of or an area of the plurality of grids. For example, an evaluation granularity is a length of 1 meter (m) and a width of 1 m. Alternatively, an evaluation granularity is 1 square meter (m²). When the route is a route in a three-dimensional region (three-dimensional space), the evaluation granularity requirement may be a length, a width, and a height of or a volume of the plurality of grids. For example, an evaluation granularity is a length of 1 meter (m), a width of 1 m, and a height of 1 m. Alternatively, an evaluation granularity is 1 cubic meter (m³). It may be understood that, when the first message includes the evaluation granularity requirement, the evaluation granularity requirement indicates a size of a plurality of first grids included in a region that covers the first route.

The slice identifier indicates a network slice for reserving a network resource. It may be understood that the first message may include the slice identifier on a premise that the management service consumer has reached an agreement with a network operator on a slice service, to be specific, the management service consumer may know an identifier of a slice to be applied to a service of the management service consumer.

The policy adjustment parameter indicates a parameter, for example, an adjustable parameter and a value range of the parameter, to be adjusted during update of a network resource reservation policy. The tunable parameter may be a related parameter, for example, a radio spectrum, a tracking area (tracking area, TA) list, a UE mobility level, latency tolerance, an uplink/downlink maximum packet size, uplink/downlink reliability, and a resource sharing level, of a configured slice and a slice subnet. The reservation policy indicates a configuration mode of a reserved network resource, for example, configuring an air interface frequency band and a tracking area of the slice subnet (a RAN), or for another example, configuring the uplink/downlink reliability and the resource sharing level of the slice subnet (a CN). In other words, in a process of obtaining the network resource reservation policy, an obtained reservation policy may be updated. For example, when a network resource reservation policy #1 obtained for the 1^{st} time does not meet a requirement, a reservation policy #2 may be further obtained based on the reservation policy #1. In other words, the reservation policy #2 is a policy obtained based on the reservation policy #1, and the policy adjustment parameter is adjusted in a process of obtaining the reservation policy #2. The policy adjustment parameter may be determined based on an internal policy of operator network management, or may be determined based on another condition. This is not limited.

The optimization stop condition indicates a condition for stopping updating a network resource reservation policy. For example, a maximum quantity of iteration times is set. In other words, in a process of obtaining the network resource reservation policy, the obtained reservation policy may be updated. For example, when a network resource reservation policy #1 obtained for the 1^{st} time does not meet a requirement, a reservation policy #2 may be further obtained based on the reservation policy #1. In this case, the optimization stop condition indicates the condition for stopping updating the reservation policy. For example, the updating is stopped after 100 times of update. For another example, a last obtained reservation policy meets the preset requirement. It may be understood that the optimization stop condition may be flexibly set based on an actual situation. This is not limited. In addition, the optimization stop condition may be determined based on an internal policy of the operator network management, or may be determined based on another condition. This is not limited.

It may be understood that the "update" in embodiments of this application is merely a description example, and the "update" may alternatively be replaced with any possible description, for example, "optimization" or "iteration". This is not limited.

The management service consumer may flexibly determine the route planning indication, the network performance requirement, the evaluation granularity requirement, the slice identifier, the policy adjustment parameter, or the optimization stop condition based on an actual situation. It may be understood that the network performance requirement, the evaluation granularity requirement, the policy adjustment parameter, or the optimization stop condition may be preset in the first management service provider entity. In this case, the first message may not include the network performance requirement, the evaluation granularity requirement, the policy adjustment parameter, or the optimization stop condition.

S402: The first management service provider entity obtains a network resource reservation policy based on the first message.

The network resource reservation policy indicates a configuration mode of a reserved network resource, for example, configuring the air interface frequency band of the slice subnet (the RAN) as n1 and configuring the tracking area of the slice subnet (the RAN) as TA1 (TA1 is an example of a TA identifier), or for another example, configuring the uplink/downlink reliability of the slice subnet (a CN) as 75% and configuring the resource sharing level of the slice subnet (the CN) as non-sharing. A network resource configured in the configuration mode is capable of ensuring the communication service quality during the movement along the first route within the first duration. To be specific, the network resource configured in the configuration mode is a reserved network resource on the first route within the first duration, so that the terminal can use the network resource when moving along the first route within the first duration, to ensure communication service quality experienced by the terminal during the movement along the first route within the first duration.

There are a plurality of manners of obtaining the network resource reservation policy. For example, the network resource reservation policy may be obtained by the first management service provider entity from another entity (for example, the second management service provider entity), or may be autonomously generated by the first management service provider entity. The following cases are separately described.

Case 1: The first management service provider entity obtains the network resource reservation policy from the second management service provider entity.

In this case, that the first management service provider entity obtains the network resource reservation policy based on the first message may specifically include: The first management service provider entity obtains the network resource reservation policy from the second management service provider entity based on the first message. In other words, the first management service provider entity may obtain the network resource reservation policy from the second management service provider entity, and the first management service provider entity does not need to generate the network resource reservation policy based on the first message. In this way, overheads of the first management service provider entity can be reduced.

Specifically, that the first management service provider entity obtains the network resource reservation policy from the second management service provider entity based on the first message may specifically include: The first management service provider entity sends a fourth message to the second management service provider entity based on the first message, where the fourth message is for requesting to determine the network resource reservation policy based on the network performance requirement. Correspondingly, the second management service provider entity receives the fourth message from the first management service provider entity. The second management service provider entity sends a fifth message to the first management service provider entity based on the fourth message, where the fifth message indicates the network resource reservation policy. Correspondingly, the first management service provider entity receives the fifth message from the second management service provider entity.

The fourth message may specifically indicate a request (denoted as a request #1) for determining, based on the network performance requirement, a network resource reservation policy applicable to at least one network element, or indicate a request (denoted as a request #2) for ensuring, based on the network performance requirement, the communication service quality during the movement along the first route within the first duration. A specific function of the fourth message is related to an operation of the first management service provider entity. Specifically, the first management service provider entity may determine the at least one network element (described below) based on the first message, and send the at least one network element to the second management service provider entity. In this case, the function of the fourth message is the request #1. Alternatively, the first management service provider entity may forward each piece of information included in the first message to the second management service provider entity. In this case, the function of the fourth message is the request #2. In other words, different processing performed by the first management service provider entity based on the first message corresponds to different fourth messages (described below).

The fifth message may include at least one of the following: the network resource reservation policy, an identifier of the network resource reservation policy, a feature of the network resource reservation policy, or a service assurance satisfaction degree corresponding to the network resource reservation policy.

The network resource reservation policy is a specific configuration mode for each network element, for example, a configuration value of an attribute of each network element. The identifier of the network resource reservation policy is a unique identifier allocated by the second management service provider entity to each obtained reservation policy when the second management service provider entity obtains the network resource reservation policy. The feature of the network resource reservation policy is a description of the network resource reservation policy, for example, that latency is optimal or a throughput is optimal.

The service assurance satisfaction degree may represent a degree of matching between network performance and the network performance requirement. The network performance corresponds to the network performance requirement. When the network performance requirement is the throughput requirement or the latency requirement, the network performance is the throughput or the latency. The network performance is network performance measured or estimated by the second management service provider entity. For example, if the network performance requirement is that the throughput reaches 50 megabits per second (Mbit/s), and the network performance is 40 Mbit/s, the service assurance satisfaction degree is 80%. The service assurance satisfaction degree corresponding to the network resource reservation policy may indicate a degree of matching between network performance of a network resource corresponding to the network resource reservation policy and the network performance requirement. To be specific, a higher service assurance satisfaction degree indicates better network performance of the network resource. The network resource corresponding to the network resource reservation policy is the network resource configured based on the network resource reservation policy.

It may be understood that there is a correspondence among the network resource reservation policy, the identifier of the network resource reservation policy, the feature of the network resource reservation policy, and the service assurance satisfaction degree corresponding to the network resource reservation policy. For example, when the network resource reservation policy includes one policy, the identifier of the network resource reservation policy, the feature of the network resource reservation policy, and the service assurance satisfaction degree corresponding to the network resource reservation policy are all parameters corresponding to the policy. When the network resource reservation policy includes a plurality of policies, the identifier of the network resource reservation policy, the feature of the network resource reservation policy, and the service assurance satisfaction degree corresponding to the network resource reservation policy all include a plurality of pieces of information, and the plurality of pieces of information respectively correspond to the plurality of policies.

For example, the network resource reservation policy includes three policies, identifiers of the three network resource reservation policies are respectively a policy #1, a policy #2, and a policy #3, features of the three network resource reservation policies are respectively a feature #1, a feature #2, and a feature #3, and service assurance satisfaction degrees corresponding to the three network resource reservation policies are respectively a satisfaction degree #1, a satisfaction degree #2, and a satisfaction degree #3. The policy #1, the feature #1, and the satisfaction degree #1 correspond to each other, the policy #2, the feature #2, and the satisfaction degree #2 correspond to each other, and the policy #3, the feature #3, and the satisfaction degree #3 correspond to each other. These correspondences may be sent to the first management service provider entity by placing different information in a same tuple, or may be sent to the first management service provider entity in another manner. This is not limited.

The following describes different cases of the fourth message.

In a first possible implementation, the fourth message specifically indicates the request for determining, based on the network performance requirement, the network resource reservation policy applicable to the at least one network element, a service range of the at least one network element (described below) includes the first region (described below), and the first region is a region in which the first route is located.

Optionally, the fourth message includes at least one of the following: the information indicating the first duration, region information, or information indicating the at least one network element.

For the information indicating the first duration, refer to the related descriptions of "S401" above. Details are not described herein again.

That the service range of the at least one network element includes the first region means: The service range of the at least one network element may cover the first region. The at least one network element may be determined by the first management service provider entity based on the first route and the evaluation granularity requirement. For example, the first management service provider entity may determine the first region based on the first route and the evaluation granularity requirement, then determine network elements in the first region that provide network services, and determine, from the network elements, the at least one network element that can cover the first region. For example, the first management service provider entity determines, based on the first region, a network element #1 to a network element #6 in the first region that are configured to provide network services, and then determines, based on the network element #1 to the network element #6, the network element #2 to the network element #5 that can cover the first region. In this case, the at least one network element is the network element #2 to the network element #5. The information indicating the at least one network element may be specific information of the at least one network element, for example, a location and a name of the network element. This is not limited.

That the first region is the region in which the first route is located means: The first region may cover the first route. The first region may be determined by the first management service provider entity based on the first route and the evaluation granularity requirement. For example, the first management service provider entity determines a corresponding grid based on the evaluation granularity requirement, and then covers the first route by using the grid. In other words, the first region may include a plurality of grids.

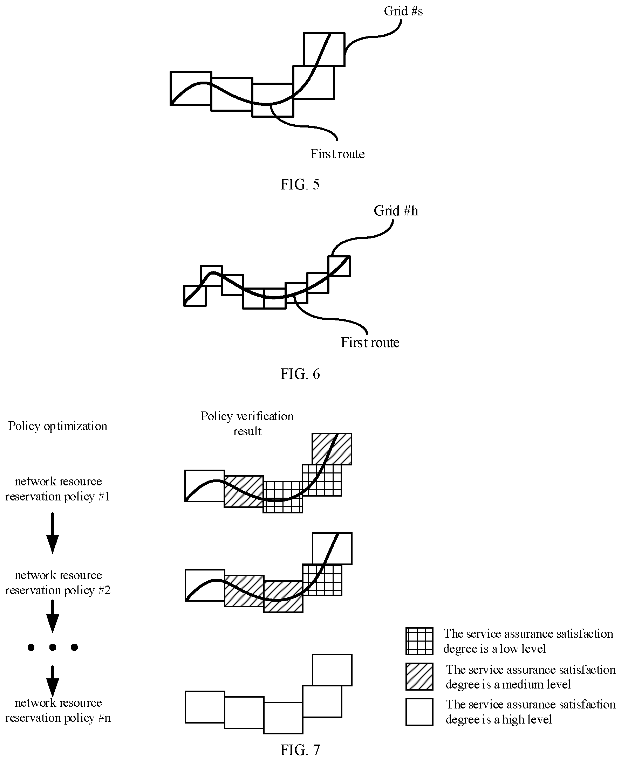

For example, as shown in FIG. 5, a grid #s is determined based on the evaluation granularity requirement, where the grid #s is a box with a length of 2 m and a width of 2 m. The first route is covered by using a plurality of grids #s, and a region including the plurality of grids #s is the first region. For another example, as shown in FIG. 6, a grid #h is determined based on the evaluation granularity requirement, where the grid #h is a box with a length of 1 m and a width of 1 m. The first route is covered by using a plurality of grids #h, and a region including the plurality of grids #h is the first region. A size of the grid #h is smaller than that of the grid #s, to be specific, an evaluation granularity requirement corresponding to the grid #h is higher, and an evaluation granularity requirement corresponding to the grid #s is lower. It can be learned that the first region determined by using the grid #s has a higher granularity. In other words, a higher evaluation granularity requirement indicates a higher granularity of the determined first region.

The region information indicates a plurality of first grids included in the first region. To be specific, the plurality of first grids may be obtained when the first route is covered by using the first grid based on the evaluation granularity requirement. The region information may include at least one of the following: respective identifiers of the plurality of first grids, a size of the plurality of first grids, or respective locations of the plurality of first grids. The size of the plurality of first grids corresponds to the evaluation granularity requirement. The respective locations of the plurality of first grids may be represented by respective central points of the first grids, or may be represented in another manner. This is not limited. It may be understood that the plurality of first grids may be clearly indicated by using the respective identifiers of the plurality of first grids, the size of the plurality of first grids, and the respective locations of the plurality of first grids. The region information may be determined by the first management service provider entity based on the first route and the evaluation granularity requirement. For details, refer to the foregoing related descriptions of determining the first region, and the details are not described herein again. Alternatively, the region information may be obtained by the first management service provider entity from another place. This is not limited.

After receiving the first message, the first management service provider entity may obtain, based on the first message, the information indicating the first duration, the region information, or the information indicating the at least one network element, and send these pieces of information to the second management service provider entity by using a third message, so that the second management service provider entity obtains the network resource reservation policy based on the third message.

Further, that the first management service provider entity sends the fourth message to the second management service provider entity based on the first message may specifically include: The first management service provider entity obtains, based on the first message, at least one of the following information: the region information or the information indicating the at least one network element. The first management service provider entity sends the fourth message to the second management service provider entity based on the first message and the at least one of the following information. Correspondingly, the second management service provider entity receives the fourth message from the first management service provider entity.

For the obtaining, by the first management service provider entity based on the first message, the region information and/or the information indicating the at least one network element, refer to the foregoing related descriptions. Details are not described herein again. After obtaining the region information and/or the information indicating the at least one network element, the first management service provider entity may send, to the second management service provider entity, the region information and/or the information indicating the at least one network element, to help the second management service provider entity obtain the network resource reservation policy based on the information. In this way, the second management service provider entity does not need to obtain, based on the first message, the region information and/or the information indicating the at least one network element, to reduce overheads of the second management service provider entity.

Optionally, the fourth message includes at least one of the following: the network performance requirement, the slice identifier, a policy optimization indication, the policy adjustment parameter, or the optimization stop condition.

The policy optimization indication indicates to optimize a network resource reservation policy. In other words, in a process of obtaining the network resource reservation policy, an obtained network resource reservation policy is optimized to obtain a better network resource reservation policy. It may be understood that if the fourth message includes the policy optimization indication, it indicates that the second management service provider entity needs to obtain network resource reservation policies for a plurality of times, to obtain a currently optimal network resource reservation policy, in other words, the network resource reservation policy cannot be obtained only once. For the network performance requirement, the slice identifier, the policy adjustment parameter, and the optimization stop condition, refer to the related descriptions of "S401" above. Details are not described herein again.

It may be understood that the network performance requirement, the policy optimization indication, the policy adjustment parameter, or the optimization stop condition may be preset in the second management service provider entity. In this case, the fourth message may not include the network performance requirement, the policy optimization indication, the policy adjustment parameter, or the optimization stop condition. In addition, the first management service provider entity may determine, based on an actual situation, whether to optimize the network resource reservation policy, in other words, whether to include the policy optimization indication in the fourth message.

Optionally, before that the second management service provider entity sends, to the first management service provider entity based on the fourth message, the fifth message indicating the network resource reservation policy, the communication method may further include: The second management service provider entity constructs a network twin model based on the region information and the information indicating the at least one network element. The second management service provider entity obtains the network resource reservation policy by using the network twin model based on the fourth message.

A specific manner in which the second management service provider entity constructs the network twin model based on the region information and the information indicating the at least one network element is not limited in this embodiment of this application. The region information and the information indicating the at least one network element are for restricting a construction range of the network twin model and an evaluated-object range applied when a simulation task is performed by using the network twin model. A specific manner of collecting network data needed for constructing the network twin model is not limited in this embodiment of this application.

After the network twin model is constructed, the second management service provider entity may evaluate a service assurance satisfaction degree in each of the plurality of first grids based on an initial network resource reservation policy, in other words, configure the initial network resource reservation policy to the network twin model to simulate a digital network, measure network performance in each first grid in the digital network, and compare the network performance with the network performance requirement to obtain a corresponding service assurance satisfaction degree.

For example, as shown in FIG. 7, an entire communication network within a first time period may be predicted by using a trend, then communication services of the terminal in the plurality of first grids are simulated, network quality within the first time period is measured, and the network quality is compared with network performance, to obtain a service assurance satisfaction degree. Service assurance satisfaction degrees corresponding to the plurality of first grids may be obtained in parallel or in sequence. This is not limited. After obtaining a network resource reservation policy #1, the second management service provider entity may determine whether a service assurance satisfaction degree corresponding to the network resource reservation policy #1 meets the preset requirement. When the preset requirement is not met, the second management service provider entity performs policy updating based on the network resource reservation policy #1 to obtain a network resource reservation policy #2. An operation on the network resource reservation policy #2 is the same as that on the network resource reservation policy #1. To be specific, obtained network resource reservation policies are continuously updated until a service assurance satisfaction degree corresponding to a finally obtained network resource reservation policy meets the preset requirement or until the optimization stop condition is finally met. In this case, the update of the network resource reservation policy is stopped. The second management service provider entity may allocate an identifier to a network resource reservation policy obtained each time. Alternatively, after the update is stopped, the second management service provider entity may determine, based on M obtained network resource reservation policies, N policies that meet the preset requirement; and allocate identifiers to the N policies, reserve specific policy content of the N policies, and supplement the N policies with policy descriptions and service assurance satisfaction degrees, where both M and N are integers greater than 0. For example, the second management service provider entity obtains 100 network resource reservation policies, and determines two network resource reservation policies based on the preset requirement (for example, the service assurance satisfaction degree is greater than 1). In this case, the second management service provider entity allocates identifiers, for example, a policy #11 and a policy #22, to the two network resource reservation policies, reserves specific policy content of the two network resource reservation policies, supplements the policy #11 with a policy description #11 and a satisfaction degree #11, and supplements to the policy #22 with a policy description #22 and a satisfaction degree #22.

It may be understood that the service assurance satisfaction degree may be at a route granularity. To be specific, one network resource reservation policy corresponds to a service assurance satisfaction degree on one first route, namely, a degree to which a network performance indicator that is on the first route and that is estimated by using the network twin model meets the network performance requirement. For example, duration for which a user moves from a start point to an end point of the first route is measured, and then is divided by total duration; a latency weakness in an entire movement process is obtained, and then is divided by the latency requirement; or a quantity of grids on the route that meet an assurance requirement is divided by a quantity of all grids on the route. Alternatively, the service assurance satisfaction degree may be at a grid granularity. To be specific, one network resource reservation policy corresponds to service assurance satisfaction degrees in the plurality of first grids included in the first route. There may be a plurality of representation forms of the service assurance satisfaction degree. For example, the service assurance satisfaction degree may be a percentage. For example, 80% indicates that the measured network performance meets 80% of the network performance requirement. Alternatively, the service assurance satisfaction degree may indicate a degree of the network performance relative to the network performance requirement. For example, the service assurance satisfaction degree is classified into three levels, for example, a high level, a medium level, and a low level. If a ratio of the measured network performance to the network performance requirement is greater than or equal to 1, the ratio corresponds to the high level. If a ratio of the measured network performance to the network performance requirement is less than 1 and greater than or equal to 0.6, the ratio corresponds to the medium level. If a ratio of the measured network performance to the network performance requirement is less than 0.6, the ratio corresponds to the low level. Alternatively, the service assurance satisfaction degree may be a measured network performance indicator, for example, latency of 20 milliseconds (ms).

It may be understood that, when the network resource reservation policy is updated, the parameter to be adjusted during the update may be determined based on the policy adjustment parameter. In addition, when the fourth message includes the policy optimization indication, the second management service provider entity updates the obtained network resource reservation policy, to obtain a better network resource reservation policy. In other words, in this case, the second management service provider entity obtains the network resource reservation policy more than once.

It may be further understood that when a slice network is specified, for example, when the fourth message includes the slice identifier, the entire communication network within the first time period may be predicted by using the constructed network twin model in the slice network corresponding to the slice identifier, and the network resource reservation policy is obtained based on the slice network. For details, refer to the foregoing related descriptions, and the details are not described herein again.

In a second possible implementation, the fourth message is specifically for requesting to ensure, based on the network performance requirement, the communication service quality during the movement along the first route within the first duration.

Optionally, the fourth message includes at least one of the following: the information indicating the first duration or the information indicating the first route. For the information indicating the first duration and the information indicating the first route, refer to the related descriptions of "S401" above. Details are not described herein again. It may be understood that, in this case, the first management service provider entity does not process the information indicating the first route, but forwards the information to the second management service provider entity by using the fourth message. In this way, the overheads of the first management service provider entity can be reduced.

Optionally, the fourth message includes at least one of the following: the network performance requirement, the slice identifier, a policy optimization indication, the policy adjustment parameter, or the optimization stop condition. For details, refer to the foregoing related descriptions, and the details are not described herein again.

Optionally, before that the second management service provider entity sends the fifth message to the first management service provider entity based on the fourth message, the communication method may further include: The second management service provider entity constructs a network twin model based on the information indicating the first route. The second management service provider entity obtains the network resource reservation policy by using the network twin model based on the fourth message.

Specifically, the second management service provider entity may obtain region information and at least one network element based on the information indicating the first route and the evaluation granularity requirement. A specific operation is similar to the foregoing operation that may be performed by the first management service provider entity to obtain the region information and the at least one network element based on the information indicating the first route and the evaluation granularity requirement, and reference may be made to the foregoing related descriptions. Details are not described herein again. After the region information and the at least one network element are obtained, the network twin model may be constructed based on the region information and the at least one network element. For the obtaining, by the second management service provider entity, the network resource reservation policy by using the network twin model, refer to the foregoing related descriptions. Details are not described herein again.

Case 2: The first management service provider entity generates the network resource reservation policy.

In this case, that the first management service provider entity obtains the network resource reservation policy based on the first message may specifically include: The first management service provider entity generates the network resource reservation policy based on the first message. In other words, the first management service provider entity may autonomously generate the network resource reservation policy based on the first message, and does not need to obtain the network resource reservation policy from another entity.

Specifically, that the first management service provider entity generates the network resource reservation policy based on the first message may specifically include: The first management service provider entity obtains region information and at least one network element based on the information indicating the first route. The first management service provider entity constructs a network twin model based on the region information and the at least one network element. The first management service provider entity obtains the network resource reservation policy by using the network twin model based on the first message.

It may be understood that, for the obtaining, by the first management service provider entity, the region information and the at least one network element based on the information indicating the first route, refer to the foregoing related descriptions. Details are not described herein again. In addition, the operations of constructing, by the first management service provider entity, the network twin model based on the region information and the at least one network element and obtaining the network resource reservation policy by using the network twin model are similar to those performed by the second management service provider entity. For details, refer to the foregoing related descriptions, and the details are not described herein again.

S403: The first management service provider entity triggers network resource configuration based on the network resource reservation policy.

The network resource reservation policy may include one or more policies. This is specifically related to the network resource reservation policy obtained by the first management service provider entity. When the network resource reservation policy includes one policy, the first management service provider entity may trigger the network resource configuration based on the policy. When the network resource reservation policy includes a plurality of policies, the first management service provider entity may trigger the network resource configuration based on one policy selected from the plurality of policies. The policy may be selected by the first management service provider entity, or may be selected by the management service consumer. This is not limited. A specific manner of triggering the network resource configuration based on the network resource reservation policy is not limited in this embodiment of this application.

Optionally, after that the first management service provider entity obtains the network resource reservation policy, the communication method may further include: The first management service provider entity sends, to the management service consumer based on the network resource reservation policy, a second message indicating the network resource reservation policy. Correspondingly, the management service consumer receives the second message from the first management service provider entity.

The second message may include at least one of the following: the network resource reservation policy, the identifier of the network resource reservation policy, the feature of the network resource reservation policy, or the service assurance satisfaction degree corresponding to the network resource reservation policy. For each piece of information, refer to the related descriptions of "S402" above. Details are not described herein again.

It may be understood that the second message may not include the network resource reservation policy. In other words, the management service consumer does not need to know specific content of the network resource reservation policy, but may know that the network resource reservation policy has been generated and know information, such as the feature and the satisfaction degree, about the network resource reservation policy. In this way, communication overheads can be reduced.

In addition, when the network resource reservation policy includes one policy, the triggering, by the first management service provider entity, the network resource configuration based on the network resource reservation policy (S403) and the sending, by the first management service provider entity, the second message to the management service consumer based on the network resource reservation policy may be performed simultaneously or may be performed in sequence. For example, the first management service provider entity first triggers the network resource configuration, and then sends the second message to the management service consumer. For another example, the first management service provider entity first sends the second message to the management service consumer, and then triggers the network resource configuration. This is not limited.

When the network resource reservation policy includes a plurality of policies, and the management service consumer selects a to-be-applied policy from the plurality of policies, the management service consumer may select one policy from the plurality of policies after receiving the second message, and send the policy to the first management service provider entity, so that the first management service provider entity triggers the network resource configuration based on the policy. To be specific, in this case, that the first management service provider entity triggers the network resource configuration based on the network resource reservation policy may specifically include: The management service consumer sends, to the first management service provider entity based on the second message, a third message indicating the to-be-applied policy, where the to-be-applied policy is a policy selected from the network resource reservation policy. Correspondingly, the first management service provider entity receives, from the management service consumer, the third message indicating the to-be-applied policy. The first management service provider entity triggers the network resource configuration based on the to-be-applied policy. In other words, in this case, the first management service provider entity needs to first send, to the management service consumer, the second message indicating the network resource reservation policy. After the management service consumer determines the to-be-applied policy based on the second message, and sends the to-be-applied policy to the first management service provider entity by using the third message, the first management service provider entity triggers the network resource configuration based on the to-be-applied policy.

It may be further understood that, when the network resource reservation policy includes a plurality of policies, and the management service consumer may select the to-be-applied policy from the plurality of policies, the management service consumer may send related information of the selected to-be-applied policy to the first management service provider entity.

In conclusion, in this embodiment of this application, after receiving the first message from the management service consumer, the first management service provider entity may reserve, based on the first message, the network resource corresponding to the first route within the first duration, so that the terminal can use the network resource when moving along the first route within the first duration. In this way, the communication service quality experienced by the terminal during the movement along the first route within the first duration can be ensured.

### Scenario 1:

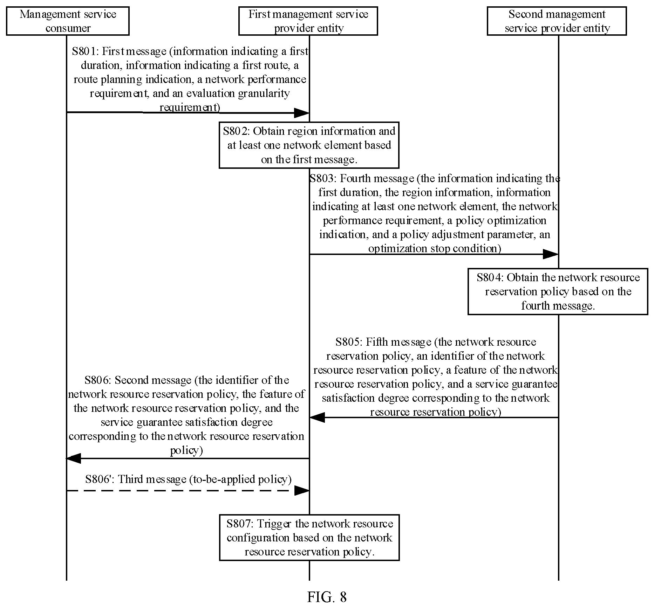

FIG. 8 is a schematic flowchart 2 of a communication method according to an embodiment of this application. The communication method is applicable to the foregoing communication system, and mainly relates to the management service consumer, the first management service provider entity, and the second management service provider entity. In the scenario 1, the management service consumer may request the first management service provider entity to ensure, based on a network performance requirement, communication service quality during movement along a first route within a first duration. The first management service provider entity may obtain a network resource reservation policy from the second management service provider entity, and trigger network resource configuration based on the network resource reservation policy.

As shown in FIG. 8, a procedure for the communication method is as follows:
S801: The management service consumer sends a first message to the first management service provider entity. Correspondingly, the first management service provider entity receives the first message from the management service consumer.

The first message is for requesting to ensure, based on the network performance requirement, the communication service quality during the movement along the first route within the first duration, and the first message includes: information indicating the first duration, information indicating the first route, a route planning indication, the network performance requirement, and an evaluation granularity requirement. For details, refer to the related descriptions of "S401" above, and the details are not described herein again.

S802: The first management service provider entity obtains region information and at least one network element based on the first message.

Specifically, the first management service provider entity may divide a first region into a plurality of grids based on the information indicating the first route, to obtain the region information; and obtain, based on the first region, the at least one network element whose service range covers the first region.

S803: The first management service provider entity sends a fourth message to the second management service provider entity. Correspondingly, the second management service provider entity receives the fourth message from the first management service provider entity.

The fourth message is for requesting to determine the network resource reservation policy based on the network performance requirement. In the scenario 1, the fourth message specifically indicates a request for determining, based on the network performance requirement, a network resource reservation policy applicable to the at least one network element. The fourth message includes the information indicating the first duration, the region information, information indicating the at least one network element, the network performance requirement, a policy optimization indication, a policy adjustment parameter, and an optimization stop condition. For details, refer to the related descriptions of "S402" above, and the details are not described herein again.

S804: The second management service provider entity obtains the network resource reservation policy based on the fourth message.

Specifically, the second management service provider entity constructs a network twin model based on the region information and the information indicating the at least one network element, and obtains the network resource reservation policy by using the network twin model based on the fourth message.

S805: The second management service provider entity sends a fifth message to the first management service provider entity. Correspondingly, the first management service provider entity receives the fifth message from the second management service provider entity.

The fifth message indicates the network resource reservation policy, and the fifth message includes the network resource reservation policy, an identifier of the network resource reservation policy, a feature of the network resource reservation policy, and a service assurance satisfaction degree corresponding to the network resource reservation policy. For details, refer to the related descriptions of "S402" above, and the details are not described herein again.

S806: The first management service provider entity sends a second message to the management service consumer. Correspondingly, the management service consumer receives the second message from the first management service provider entity.

The second message indicates the network resource reservation policy, and the second message includes the identifier of the network resource reservation policy, the feature of the network resource reservation policy, and the service assurance satisfaction degree corresponding to the network resource reservation policy. For details, refer to the related descriptions of "S403" above, and the details are not described herein again.

S807: The first management service provider entity triggers the network resource configuration based on the network resource reservation policy.

When the network resource reservation policy includes one policy, the first management service provider entity may trigger the network resource configuration based on the policy. When the network resource reservation policy includes a plurality of policies, the first management service provider entity may receive, from the management service consumer, a third message indicating a to-be-applied policy (S806' in FIG. 8), where the to-be-applied policy is a policy selected from the network resource reservation policy; and trigger the network resource configuration based on the to-be-applied policy.

It may be understood that for specific implementations of S801 to S807, refer to the related descriptions of S401 to S403 above. Details are not described herein again.

### Scenario 2:

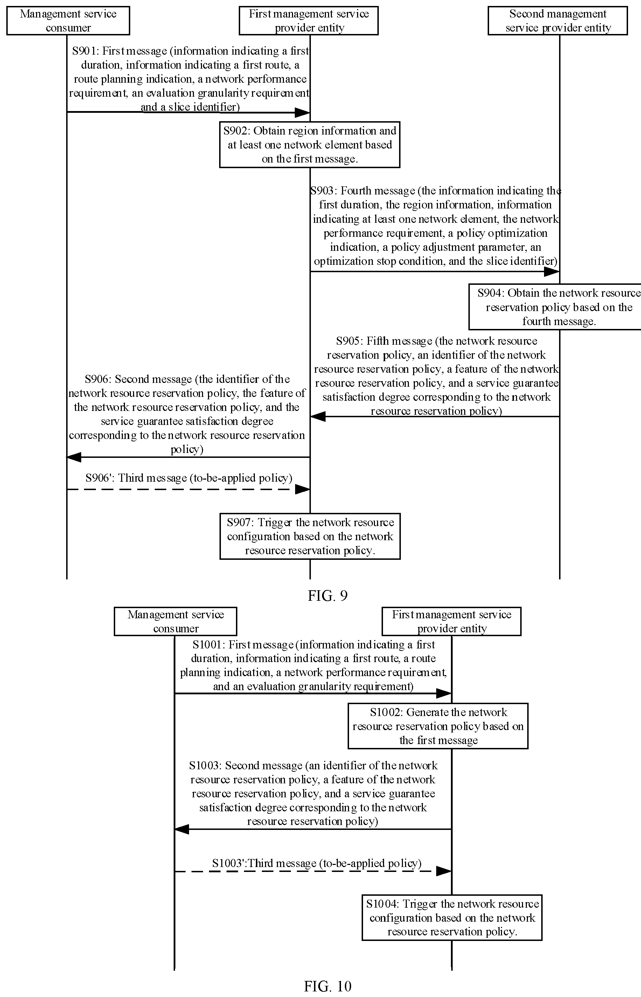

FIG. 9 is a schematic flowchart 3 of a communication method according to an embodiment of this application. The communication method is applicable to the foregoing communication system, and mainly relates to the management service consumer, the first management service provider entity, and the second management service provider entity. In the scenario 2, the management service consumer may request the first management service provider entity to ensure, based on a network performance requirement, communication service quality during movement along a first route within a first duration, and indicate a to-be-used network slice. The first management service provider entity may obtain a network resource reservation policy from the second management service provider entity, and trigger network resource configuration based on the network resource reservation policy.

As shown in FIG. 9, a procedure for the communication method is as follows:
S901: The management service consumer sends a first message to the first management service provider entity. Correspondingly, the first management service provider entity receives the first message from the management service consumer.

The first message is for requesting to ensure, based on the network performance requirement, the communication service quality during the movement along the first route within the first duration, and the first message includes: information indicating the first duration, information indicating the first route, a route planning indication, the network performance requirement, an evaluation granularity requirement, and a slice identifier. For details, refer to the related descriptions of "S401" above, and the details are not described herein again.

S902: The first management service provider entity obtains region information and at least one network element based on the first message.

S903: The first management service provider entity sends a fourth message to the second management service provider entity. Correspondingly, the second management service provider entity receives the fourth message from the first management service provider entity.

The fourth message is for requesting to determine the network resource reservation policy based on the network performance requirement. In the scenario 2, the fourth message specifically indicates a request for determining, based on the network performance requirement, a network resource reservation policy applicable to the at least one network element. The fourth message includes the information indicating the first duration, the region information, information indicating the at least one network element, the network performance requirement, a policy optimization indication, a policy adjustment parameter, an optimization stop condition, and the slice identifier. For details, refer to the related descriptions of "S402" above, and the details are not described herein again.

S904: The second management service provider entity obtains the network resource reservation policy based on the fourth message.

S905: The second management service provider entity sends a fifth message to the first management service provider entity. Correspondingly, the first management service provider entity receives the fifth message from the second management service provider entity.

S906: The first management service provider entity sends a second message to the management service consumer. Correspondingly, the management service consumer receives the second message from the first management service provider entity.

S907: The first management service provider entity triggers the network resource configuration based on the network resource reservation policy.

When the network resource reservation policy includes one policy, the first management service provider entity may trigger the network resource configuration based on the policy. When the network resource reservation policy includes a plurality of policies, the first management service provider entity may receive, from the management service consumer, a third message indicating a to-be-applied policy (S906' in FIG. 9), where the to-be-applied policy is a policy selected from the network resource reservation policy; and trigger the network resource configuration based on the to-be-applied policy.

It may be understood that the operations in S901 to S907 are similar to those in S801 to S807, and a difference lies in that the first message (S901) and the fourth message (S903) carry the slice identifier, and the second management service provider entity obtains the network resource reservation policy based on the slice network corresponding to the slice identifier. For S901 to S907, refer to the related descriptions of S801 to S807 and S401 to S403 above. Details are not described herein again.

### Scenario 3:

FIG. 10 is a schematic flowchart 4 of a communication method according to an embodiment of this application. The communication method is applicable to the foregoing communication system, and mainly relates to the management service consumer and the first management service provider entity. In the scenario 3, the management service consumer may request the first management service provider entity to ensure, based on a network performance requirement, communication service quality during movement along a first route within a first duration. The first management service provider entity generates a network resource reservation policy based on the request, and triggers network resource configuration based on the network resource reservation policy.

As shown in FIG. 10, a procedure for the communication method is as follows: S1001: The management service consumer sends a first message to the first management service provider entity. Correspondingly, the first management service provider entity receives the first message from the management service consumer.

The first message is for requesting to ensure, based on the network performance requirement, the communication service quality during the movement along the first route within the first duration, and the first message includes: information indicating the first duration, information indicating the first route, a route planning indication, the network performance requirement, and an evaluation granularity requirement. For details, refer to the related descriptions of "S401" above, and the details are not described herein again.

S1002: The first management service provider entity generates the network resource reservation policy based on the first message.

S1003: The first management service provider entity sends a second message to the management service consumer. Correspondingly, the management service consumer receives the second message from the first management service provider entity.

The second message indicates the network resource reservation policy, and the second message includes an identifier of the network resource reservation policy, a feature of the network resource reservation policy, and a service assurance satisfaction degree corresponding to the network resource reservation policy. For details, refer to the related descriptions of "S403" above, and the details are not described herein again.

S1004: The first management service provider entity triggers the network resource configuration based on the network resource reservation policy.

When the network resource reservation policy includes one policy, the first management service provider entity may trigger the network resource configuration based on the policy. When the network resource reservation policy includes a plurality of policies, the first management service provider entity may receive, from the management service consumer, a third message indicating a to-be-applied policy (S1003' in FIG. 10), where the to-be-applied policy is a policy selected from the network resource reservation policy; and trigger the network resource configuration based on the to-be-applied policy.

It may be understood that for specific implementations of 1001 to S1004, refer to the related descriptions of S401 to S403 above. Details are not described herein again.

### Scenario 4:

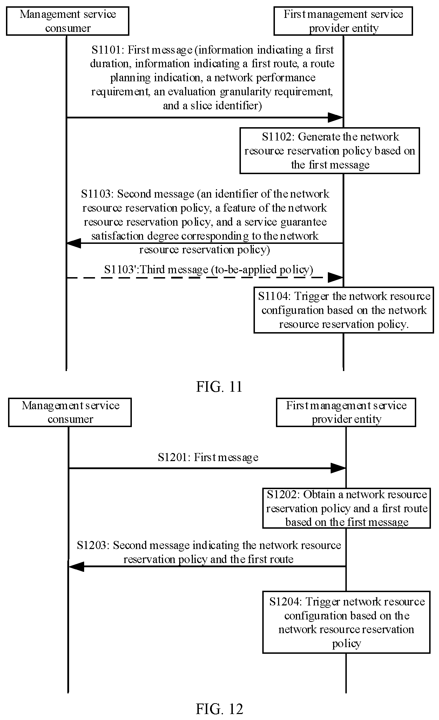

FIG. 11 is a schematic flowchart 5 of a communication method according to an embodiment of this application. The communication method is applicable to the foregoing communication system, and mainly relates to the management service consumer and the first management service provider entity. In the scenario 4, the management service consumer may request the first management service provider entity to ensure, based on a network performance requirement, communication service quality during movement along a first route within a first duration, and indicate a to-be-used network slice. The first management service provider entity generates a network resource reservation policy based on the request, and triggers network resource configuration based on the network resource reservation policy.

As shown in FIG. 11, a procedure for the communication method is as follows:
S1101: The management service consumer sends a first message to the first management service provider entity. Correspondingly, the first management service provider entity receives the first message from the management service consumer.

The first message is for requesting to ensure, based on the network performance requirement, the communication service quality during the movement along the first route within the first duration, and the first message includes: information indicating the first duration, information indicating the first route, a route planning indication, the network performance requirement, an evaluation granularity requirement, and a slice identifier. For details, refer to the related descriptions of "S401" above, and the details are not described herein again.

S1102: The first management service provider entity generates the network resource reservation policy based on the first message.

S1103: The first management service provider entity sends a second message to the management service consumer. Correspondingly, the management service consumer receives the second message from the first management service provider entity.

S1104: The first management service provider entity triggers the network resource configuration based on the network resource reservation policy.

When the network resource reservation policy includes one policy, the first management service provider entity may trigger the network resource configuration based on the policy. When the network resource reservation policy includes a plurality of policies, the first management service provider entity may receive, from the management service consumer, a third message indicating a to-be-applied policy (S1103' in FIG. 11), where the to-be-applied policy is a policy selected from the network resource reservation policy; and trigger the network resource configuration based on the to-be-applied policy.

It may be understood that the operations in S1101 to S1104 are similar to those in S1001 to S1004, and a difference lies in that the first message (S1101) carries the slice identifier, and the first management service provider entity obtains the network resource reservation policy based on the slice network corresponding to the slice identifier. For S1101 to S1104, refer to the related descriptions of S1001 to S1004 and S401 to S403 above. Details are not described herein again.

For example, FIG. 12 is a schematic flowchart 6 of a communication method according to an embodiment of this application. The method may be applied to communication between the management service consumer and the first management service provider entity in the foregoing communication system.

As shown in FIG. 12, a procedure for the communication method is as follows:
S1201: The management service consumer sends a first message to the first management service provider entity. Correspondingly, the first management service provider entity receives the first message from the management service consumer.

The first message is for requesting to provide a route from a first start point to a first end point, and ensure, based on a network performance requirement, communication service quality during movement along the route. For the network performance requirement, refer to the related descriptions of "S401" above. Details are not described herein again.

Optionally, the first message may include at least one of the following: information indicating a first duration, information indicating the first start point, or information indicating the first end point.

For the first duration and the information indicating the first duration, refer to the related descriptions of "S401" above. Details are not described herein again. The first start point is a start point from which a terminal is predicted to move. The first end point is an end point to which the terminal is predicted to move. Both the information indicating the first start point and the information indicating the first end point may be coordinate points, for example, longitude and latitude coordinates. It may be understood that the terminal in this embodiment of this application is a terminal that may be managed by the management service consumer.

The management service consumer may flexibly determine the first duration, the first start point, or the first end point based on an actual status of the terminal, for example, determine the first duration based on duration for which the terminal is predicted to move, and/or determine the first start point and the first end point based on information such as a region in which the terminal is predicted to move; and send, to the first management service provider entity, the first message carrying the information indicating the first start point, the information indicating the first end point, or the information indicating the first duration, to ensure the communication service quality based on this type of information.

It may be understood that, when the first start point, the first end point, or the first duration is preset in the first management service provider entity, the first message may not include the information indicating the first start point, the information indicating the first end point, or the information indicating the first duration. In other words, if the first message does not include the information indicating the first start point, the information indicating the first end point, or the information indicating the first duration, it may indicate that the information indicating the first start point, the information indicating the first end point, or the information indicating the first duration has been preset in the first management service provider entity.

Optionally, the first message may include a route planning indication, the network performance requirement, an evaluation granularity requirement, a slice identifier, a policy adjustment parameter, an optimization stop condition, a passing point, a passing region, a forbidden region, or a route preference.

For the route planning indication, the network performance requirement, the evaluation granularity requirement, the slice identifier, the policy adjustment parameter, and the optimization stop condition, refer to the related descriptions of S401 above. Details are not described herein again. It may be understood that, in this embodiment of this application, the moving route needs to be provided, in other words, the route planning indication indicates that the moving route needs to be provided. Therefore, when the route planning indication indicates whether the moving route needs to be provided, the first message includes the route planning indication indicating that the moving route needs to be provided, and the first management service provider entity may determine, based on the route planning indication when receiving the first message including the route planning indication, that the moving route needs to be provided. Alternatively, when the route planning indication indicates that the moving route needs to be provided, the first message includes the route planning indication; and when receiving the first message, the first management service provider entity may determine, based on that the first message includes the route planning indication, that the moving route needs to be provided. When determining that the moving route needs to be provided, the first management service provider entity may reserve a network resource for the management service consumer, and provide the moving route, to ensure network quality experienced by the terminal during movement.

The passing point indicates a place that needs to be passed through, and the passing point may be represented by longitude and latitude coordinates. In other words, a moving route requested by the management service consumer needs to pass through the place.

The passing region indicates a region that needs to be passed through. The passing region may be represented by a plurality of coordinate points included in the region, or may be represented by using another method that can represent the region. This is not limited. In other words, the moving route requested by the management service consumer needs to pass through the region.

The forbidden region indicates a place or a region that cannot be passed through. The place may be represented by longitude and latitude coordinates. The region may be represented by a plurality of coordinate points included in the region, or may be represented by using another method that can represent the region. This is not limited. In other words, the moving route requested by the management service consumer cannot pass through the place or the region.

The route preference represents a requirement on the moving route. For example, the route is less than 50 m, or the route is a straight line. This may be specifically set based on an actual situation, and is not limited.

The management service consumer may flexibly determine the route planning indication, the network performance requirement, the evaluation granularity requirement, the slice identifier, the policy adjustment parameter, the optimization stop condition, the passing point, the passing region, the forbidden region, or the route preference based on an actual situation. It may be understood that the network performance requirement, the evaluation granularity requirement, the policy adjustment parameter, the optimization stop condition, the passing point, the passing region, the forbidden region, or the route preference may be preset in the first management service provider entity. In this case, the first message may not include these pieces of information.

S1202: The first management service provider entity obtains a network resource reservation policy and a first route based on the first message.

The network resource reservation policy indicates a configuration mode of a reserved network resource, and a network resource configured in the configuration mode is capable of ensuring communication service quality during movement along the first route within the first duration. For details, refer to the related descriptions of "S402" above, and the details are not described herein again. The first route is a route from the first start point to the first end point, and the network resource reservation policy is a network resource reservation policy for the route.

There are a plurality of manners of obtaining the network resource reservation policy and the first route. The network resource reservation policy and the first route may be obtained by the first management service provider entity from another entity (for example, the second management service provider entity), or may be autonomously generated by the first management service provider entity. The following cases are separately described.

Case 1: The first management service provider entity obtains the network resource reservation policy and the first route from the second management service provider entity.

In this case, that the first management service provider entity obtains the network resource reservation policy and the first route based on the first message may specifically include: The first management service provider entity obtains the network resource reservation policy and the first route from the second management service provider entity based on the first message. In other words, the first management service provider entity may obtain the network resource reservation policy and the first route from the second management service provider entity, and the first management service provider entity does not need to generate the network resource reservation policy and the first route based on the first message. In this way, overheads of the first management service provider entity can be reduced.

Specifically, that the first management service provider entity obtains the network resource reservation policy and the first route from the second management service provider entity based on the first message may specifically include: The first management service provider entity sends a fourth message to the second management service provider entity based on the first message, where the fourth message is for requesting to provide the route from the first start point to the first end point, and determine the network resource reservation policy based on the network performance requirement. Correspondingly, the second management service provider entity receives the fourth message from the first management service provider entity. The second management service provider entity sends, to the first management service provider entity based on the fourth message, a fifth message indicating the network resource reservation policy and the first route. Correspondingly, the first management service provider entity receives the fifth message from the second management service provider entity.

The fourth message may specifically indicate a request (denoted as a request #11) for providing the route from the first start point to the first end point and determining, based on the network performance requirement, a network resource reservation policy applicable to at least one network element (described below), or indicate a request (denoted as a request #22) for providing the route from the first start point to the first end point and ensuring, based on the network performance requirement, the communication service quality during the movement along the route. A specific function of the fourth message is related to an operation of the first management service provider entity. Specifically, the first management service provider entity may determine the at least one network element based on the first message, and send the at least one network element to the second management service provider entity. In this case, the function of the fourth message is the request #11. Alternatively, the first management service provider entity may forward each piece of information included in the first message to the second management service provider entity. In this case, the function of the fourth message is the request #22. In other words, different processing performed by the first management service provider entity based on the first message corresponds to different fourth messages (described below).

The fifth message may include at least one of the following: the network resource reservation policy, an identifier of the network resource reservation policy, a feature of the network resource reservation policy, the first route, an identifier of the first route, a service assurance satisfaction degree corresponding to the first route, or a feature of the first route.

For the network resource reservation policy, the identifier of the network resource reservation policy, the feature of the network resource reservation policy, and the service assurance satisfaction degree, refer to the related descriptions of "S402" above. Details are not described herein again.

The first route is a route from the first start point to the first end point. The first route is represented in a plurality of forms. For example, if the route is represented by a plurality of coordinate points, the plurality of coordinate points may be connected to obtain the route. For another example, if the route is represented by a plurality of grids covering the route, the plurality of grids may be sequentially connected to obtain the route. This is not limited. It may be understood that, as shown in FIG. 5 and FIG. 6, when the route is represented by a plurality of grids, a higher granularity of the plurality of grids, namely, a smaller size of the grids, may indicate more accurate representation of the route. Correspondingly, a lower granularity of the plurality of grids, namely, a larger size of the grids, indicates lower accuracy of the route represented by the plurality of grids. It may be further understood that the first route may be one route or a plurality of routes.

It may be understood that, in this embodiment of this application, there is a correspondence between the first route and the network resource reservation policy. In other words, the service assurance satisfaction degree corresponding to the first route may also be referred to as a service assurance satisfaction degree corresponding to the network resource reservation policy. That is, the service assurance satisfaction degree corresponding to the first route is similar to the service assurance satisfaction degree corresponding to the network resource reservation policy in "S402" above, and reference may be made to the related descriptions of "S402". Details are not described herein again.

It may be further understood that there is a correspondence among the network resource reservation policy, the identifier of the network resource reservation policy, the feature of the network resource reservation policy, the first route, the identifier of the first route, the service assurance satisfaction degree corresponding to the first route, and the feature of the first route. For example, when the first route includes one route, the network resource reservation policy, the identifier of the network resource reservation policy, the feature of the network resource reservation policy, the identifier of the first route, the service assurance satisfaction degree corresponding to the first route, and the feature of the first route are all parameters of the first route. When the first route includes a plurality of routes, the network resource reservation policy, the identifier of the network resource reservation policy, the feature of the network resource reservation policy, the identifier of the first route, the service assurance satisfaction degree corresponding to the first route, and the feature of the first route each include a plurality of pieces of information, and the plurality of pieces of information respectively correspond to the plurality of routes.

For example, the first route includes three routes, identifiers of the three routes are respectively a route #1, a route #2, and a route #3, features of the three routes are respectively a route feature #1, a route feature #2, and a route feature #3, and service assurance satisfaction degrees corresponding to the three routes are respectively a satisfaction degree #1, a satisfaction degree #2, and a satisfaction degree #3. The network resource reservation policy includes three network resource reservation policies, identifiers of the three network resource reservation policies are respectively a policy #1, a policy #2, and a policy #3, and features of the three network resource reservation policies are respectively a policy feature #1, a policy feature #2, and a policy feature #3. The route #1, the route feature #1, the satisfaction degree #1, the policy #1, and the policy feature #1 correspond to each other, the route #2, the route feature #2, the satisfaction degree #2, the policy #2, and the policy feature #2 correspond to each other, and the route #3, the route feature #3, the satisfaction degree #3, the policy #3, and the policy feature #3 correspond to each other. These correspondences may be sent to the first management service provider entity by placing different information in a same tuple, or may be sent to the first management service provider entity in another manner. This is not limited.

The following describes different cases of the fourth message.

In a first possible implementation, the fourth message specifically indicates the request for providing the route from the first start point to the first end point and determining, based on the network performance requirement, the network resource reservation policy applicable to the at least one network element, a service range of the at least one network element (described below) includes a first region (described below), and the first region includes the first start point and the first end point.

Optionally, the fourth message may include at least one of the following: the information indicating the first start point, the information indicating the first end point, region information, information indicating the at least one network element, or the information indicating the first duration.

For the information indicating the first duration, the region information, the at least one network element, and the information indicating the at least one network element, refer to the related descriptions of "S401" above. Details are not described herein again. For the information indicating the first start point and the information indicating the first end point, refer to the related descriptions of "S1201" above. Details are not described herein again.

It may be understood that, in this embodiment of this application, the first region may be a region in which the route from the first start point to the first end point is located, to be specific, the first region includes the first start point and the first end point, in other words, the first region may cover the first start point and the first end point. It may be understood that the first region may be determined based on an actual situation, the first start point, and the first end point. For example, a size of the first region may be preset, and the first region is determined based on the size, the first start point, and the first end point. For another example, a shape of the first region may be preset, and the first region is determined based on the shape, the first start point, and the first end point. This is not limited.

After receiving the first message, the first management service provider entity may obtain, based on the first message, the information indicating the first start point, the information indicating the first end point, the region information, the information indicating the at least one network element, and the information indicating the first duration, and send these pieces of information to the second management service provider entity by using a third message, so that the second management service provider entity obtains the network resource reservation policy and the first route based on the third message.

Further, that the first management service provider entity sends the fourth message to the second management service provider entity based on the first message may specifically include: The first management service provider entity obtains, based on the first message, at least one of the following information: the region information or the information indicating the at least one network element. The first management service provider entity sends the fourth message to the second management service provider entity based on the first message and the at least one of the following information. Correspondingly, the second management service provider entity receives the fourth message from the first management service provider entity.

For the obtaining, by the first management service provider entity based on the first message, the region information and/or the information indicating the at least one network element, refer to the foregoing related descriptions. Details are not described herein again. After obtaining the region information and/or the information indicating the at least one network element, the first management service provider entity may send the region information and/or the information indicating the at least one network element to the second management service provider entity, to help the second management service provider entity obtain the network resource reservation policy and the first route based on the information. In this way, the second management service provider entity does not need to obtain, based on the first message, the region information and/or the information indicating the at least one network element, to reduce overheads of the second management service provider entity.

Optionally, the fourth message includes at least one of the following: the network performance requirement, the slice identifier, a policy optimization indication, the policy adjustment parameter, the optimization stop condition, the passing point, the forbidden region, or the route preference.

For the network performance requirement, the slice identifier, the policy optimization indication, the policy adjustment parameter, and the optimization stop condition, refer to the related descriptions of "S401" above. Details are not described herein again. For the passing point, the forbidden region, and the route preference, refer to the related descriptions of "S1201" above. Details are not described herein again.

It may be understood that the network performance requirement, the policy optimization indication, the policy adjustment parameter, the optimization stop condition, the passing point, the forbidden region, or the route preference may be preset in the second management service provider entity. In this case, the fourth message may not include the network performance requirement, the policy optimization indication, the policy adjustment parameter, the optimization stop condition, the passing point, the forbidden region, or the route preference. In addition, the first management service provider entity may determine, based on an actual situation, whether to optimize the network resource reservation policy, in other words, whether to include the policy optimization indication in the fourth message.

Optionally, before that the second management service provider entity sends, to the first management service provider entity based on the fourth message, the fifth message indicating the network resource reservation policy and the first route, the communication method may further include: The second management service provider entity constructs a network twin model based on the region information and the information indicating the at least one network element, and obtains the network resource reservation policy and the first route by using the network twin model based on the fourth message.

For the constructing, by the second management service provider entity, the network twin model based on the region information and the information indicating the at least one network element, and obtaining the network resource reservation policy by using the network twin model, refer to the related descriptions of "S402" above. Details are not described herein again.

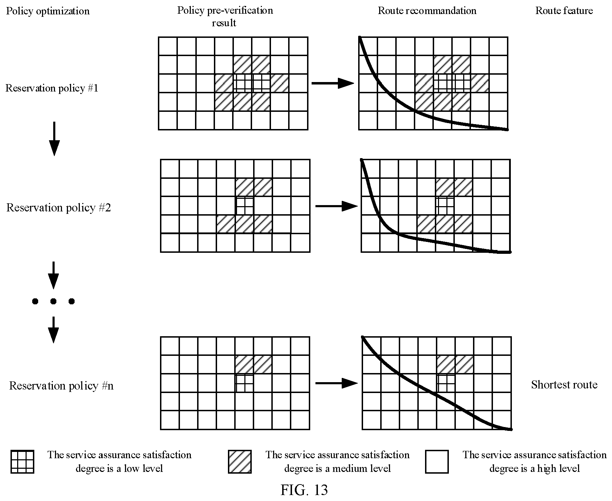

It may be understood that, as shown in FIG. 13, after determining each network resource reservation policy, the second management service provider entity may determine a corresponding route from the first start point to the first end point based on a policy pre-verification result corresponding to the reservation policy, to be specific, determine a corresponding route based on a service assurance satisfaction degree in each first grid included in the first region. When the route is determined, the route may be determined based on a plurality of first grids that meet a service assurance satisfaction degree requirement. In this way, communication service quality experienced by the terminal during movement along the route within the first duration can be ensured.

It may be further understood that, each time determining a route, the second management service provider entity may allocate an identifier to the route, and supplement the first route with a route feature description and the service assurance satisfaction degree when determining the first route.

In a second possible implementation, the fourth message specifically indicates the request for providing the route from the first start point to the first end point, and ensuring, based on the network performance requirement, the communication service quality during the movement along the route

Optionally, the fourth message may include at least one of the following: the information indicating the first duration, the information indicating the first start point, or the information indicating the first end point. For each piece of information, refer to the related descriptions of "S1201" above. Details are not described herein again. It may be understood that, in this case, the first management service provider entity does not process the information indicating the first duration and the information indicating the first start point, but forwards each piece of information to the second management service provider entity by using the fourth message. In this way, the overheads of the first management service provider entity can be reduced.

Optionally, the fourth message may include at least one of the following: the network performance requirement, the slice identifier, a policy optimization indication, the policy adjustment parameter, the optimization stop condition, the passing point, the forbidden region, or the route preference. For each piece of information, refer to the foregoing related descriptions. Details are not described herein again.

Optionally, before that the second management service provider entity sends, to the first management service provider entity based on the fourth message, the fifth message indicating the network resource reservation policy and the first route, the communication method may further include: The second management service provider entity constructs a network twin model based on the information indicating the first start point and the information indicating the first end point, and obtains the network resource reservation policy and the first route by using the network twin model based on the fourth message.

Specifically, the second management service provider entity may obtain region information and at least one network element based on the information indicating the first duration, the information indicating the first start point, and the evaluation granularity requirement. A specific operation is similar to the foregoing operation that is performed by the first management service provider entity to obtain the region information and the at least one network element based on the information indicating the first duration, the information indicating the first start point, and the evaluation granularity requirement, and reference may be made to the foregoing related descriptions. Details are not described herein again. After the region information and the at least one network element are obtained, the network twin model may be constructed based on the region information and the at least one network element. For the obtaining, by the second management service provider entity, the network resource reservation policy by using the network twin model, refer to the foregoing related descriptions. Details are not described herein again.

Case 2: The first management service provider entity generates the network resource reservation policy.

In this case, that the first management service provider entity obtains the network resource reservation policy and the first route based on the first message may specifically include: The first management service provider entity generates the network resource reservation policy and the first route based on the first message. In other words, the first management service provider entity may autonomously generate the network resource reservation policy and the first route based on the first message, and does not need to obtain the network resource reservation policy and the first route from another entity.

Specifically, that the first management service provider entity generates the network resource reservation policy and the first route based on the first message may specifically include: The first management service provider entity obtains region information and at least one network element based on the information indicating the first start point and the information indicating the first end point. The first management service provider entity constructs a network twin model based on the region information and the at least one network element. The first management service provider entity obtains the network resource reservation policy and the first route by using the network twin model based on the first message.

It may be understood that, for the obtaining, by the first management service provider entity, the region information and the at least one network element based on the information indicating the first start point and the information indicating the first end point, refer to the foregoing related descriptions. Details are not described herein again. In addition, the operations of constructing, by the first management service provider entity, the network twin model based on the region information and the at least one network element and obtaining the network resource reservation policy and the first route by using the network twin model are similar to those performed by the second management service provider entity, and reference may be made to the foregoing related descriptions. Details are not described herein again.

S1203: The first management service provider entity sends, to the management service consumer, a second message indicating the network resource reservation policy and the first route. Correspondingly, the management service consumer receives, from the first management service provider entity, the second message indicating the network resource reservation policy and the first route.

The second message may include at least one of the following: the network resource reservation policy, an identifier of the network resource reservation policy, a feature of the network resource reservation policy, the first route, the identifier of the first route, the service assurance satisfaction degree corresponding to the first route, or the feature of the first route. For each piece of information, refer to the related descriptions of "S1202" above. Details are not described herein again.

It may be understood that the second message may not include the network resource reservation policy. In other words, the management service consumer does not need to know specific content of the network resource reservation policy, but may know that the network resource reservation policy has been generated and know information, such as the feature and the satisfaction degree, about the network resource reservation policy.

After obtaining the network resource reservation policy and the first route, the first management service provider entity may indicate the network resource reservation policy and the first route to the management service consumer by using the second message. It may be understood that the first route may include at least one route, and the network resource reservation policy may include at least one policy. For details, refer to the related descriptions of S1202 above, and the details are not described herein again.

S1204: The first management service provider entity triggers network resource configuration based on the network resource reservation policy.

The network resource reservation policy may include one or more policies. This is specifically related to the network resource reservation policy obtained by the first management service provider entity.

When the network resource reservation policy includes one policy, the first management service provider entity may trigger the network resource configuration based on the policy. In this case, the triggering, by the first management service provider entity, the network resource configuration based on the network resource reservation policy (S1204) and the sending, by the first management service provider entity, the second message to the management service consumer based on the network resource reservation policy (S1203) may be performed simultaneously or may be performed in sequence. For example, the first management service provider entity first triggers the network resource configuration, and then sends the second message to the management service consumer. For another example, the first management service provider entity first sends the second message to the management service consumer, and then triggers the network resource configuration. This is not limited.

When the network resource reservation policy includes a plurality of policies, the first management service provider entity may trigger the network resource configuration based on one policy selected from the plurality of policies. The policy may be selected by the first management service provider entity, or may be selected by the management service consumer. This is not limited. A specific manner of triggering the network resource configuration based on the network resource reservation policy is not limited in this embodiment of this application.

Optionally, when the network resource reservation policy includes a plurality of policies, that the first management service provider entity triggers the network resource configuration based on the network resource reservation policy may specifically include: The first management service provider entity sends, to the management service consumer based on the second message, a third message indicating a to-be-applied policy, where the to-be-applied policy is a policy selected from the network resource reservation policy. Correspondingly, the management service consumer receives the third message from the first management service provider entity. The first management service provider entity triggers the network resource configuration based on the to-be-applied policy. In other words, in this case, the first management service provider entity needs to first send, to the management service consumer, the second message indicating the network resource reservation policy and the first route. After the management service consumer determines the to-be-applied policy based on the second message, and sends the to-be-applied policy to the first management service provider entity by using the third message, the first management service provider entity triggers the network resource configuration based on the to-be-applied policy.

In conclusion, in this embodiment of this application, after receiving the first message from the management service consumer, the first management service provider entity may obtain the first route based on the first message, and reserve a network resource corresponding to the first route within the first duration, so that the terminal can use the network resource when moving along the first route within the first duration. In this way, the communication service quality experienced by the terminal during the movement along the first route within the first duration can be ensured.

### Scenario 5:

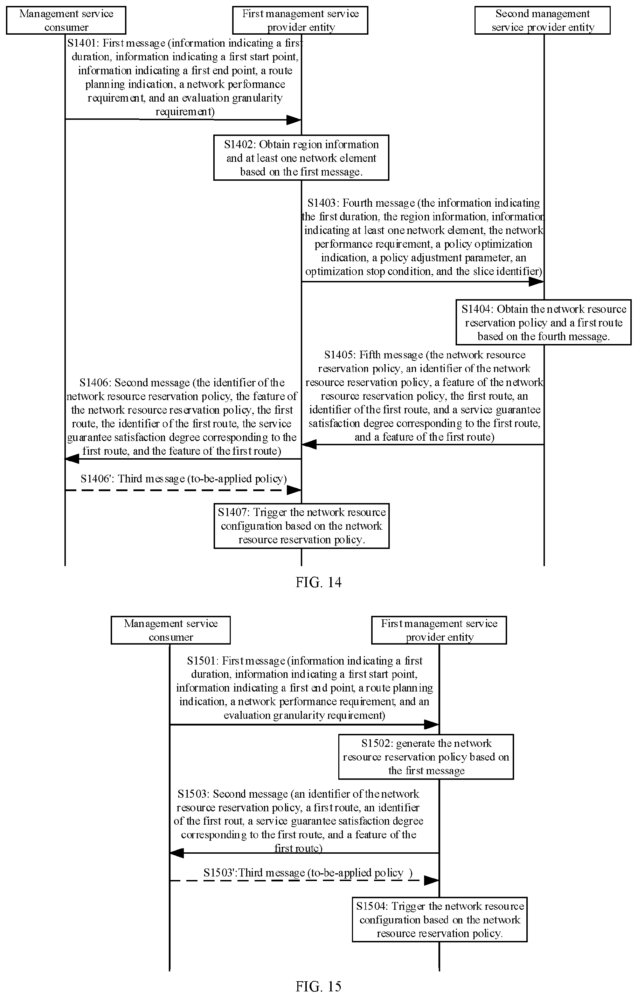

FIG. 14 is a schematic flowchart 7 of a communication method according to an embodiment of this application. The communication method is applicable to the foregoing communication system, and mainly relates to the management service consumer, the first management service provider entity, and the second management service provider entity. In the scenario 5, the management service consumer may request the first management service provider entity to provide a route from a first start point to a first end point, and ensure, based on a network performance requirement, communication service quality during movement along the route. The first management service provider entity may obtain, from the second management service provider entity, a network resource reservation policy and a first route from the first start point to the first end point. In addition, the first management service provider entity may send the first route and the network resource reservation policy to the management service consumer, and trigger network resource configuration based on the network resource reservation policy.

As shown in FIG. 14, a procedure for the communication method is as follows:
S1401: The management service consumer sends a first message to the first management service provider entity. Correspondingly, the first management service provider entity receives the first message from the management service consumer.

The first message is for requesting to provide the route from the first start point to the first end point, and ensure, based on the network performance requirement, the communication service quality during the movement along the route. In addition, the first message includes information indicating a first duration, information indicating the first start point, information indicating the first end point, a route planning indication, the network performance requirement, and an evaluation granularity requirement.

It may be understood that the first message may further include a slice identifier, a policy adjustment parameter, an optimization stop condition, a passing point, a passing region, a forbidden region, and a route preference.

For details about the first message, refer to the related descriptions of "S1201" above, and the details are not described herein again.

S1402: The first management service provider entity obtains region information and at least one network element based on the first message.

Specifically, the first management service provider entity may determine a first region based on the information indicating the first start point and the information indicating the first end point, and divide the first region into a plurality of grids, to obtain the region information; and obtain, based on the first region, the at least one network element whose service range covers the first region.

S1403: The first management service provider entity sends a fourth message to the second management service provider entity. Correspondingly, the second management service provider entity receives the fourth message from the first management service provider entity.

The fourth message is for requesting to provide the route from the first start point to the first end point. In the scenario 5, the fourth message may specifically indicate a request for providing the route from the first start point to the first end point, and determining, based on the network performance requirement, a network resource reservation policy applicable to the at least one network element. In addition, the fourth message includes: the information indicating the first start point, the information indicating the first end point, the region information, information indicating the at least one network element, the information indicating the first duration, the network performance requirement, a policy optimization indication, the policy adjustment parameter, and the optimization stop condition.

Optionally, the fourth message further includes the slice identifier, the passing point, the forbidden region, and the route preference.

For details about the fourth message, refer to the related descriptions of "S1202" above, and the details are not described herein again.

S1404: The second management service provider entity obtains the network resource reservation policy and the first route based on the fourth message.

Specifically, the second management service provider entity constructs a network twin model based on the region information and the information indicating the at least one network element, and obtains the network resource reservation policy and the first route by using the network twin model based on the fourth message.

S1405: The second management service provider entity sends a fifth message to the first management service provider entity. Correspondingly, the first management service provider entity receives the fifth message from the second management service provider entity.

The fifth message indicates the network resource reservation policy and the first route, and the fifth message includes the network resource reservation policy, an identifier of the network resource reservation policy, a feature of the network resource reservation policy, the first route, an identifier of the first route, a service assurance satisfaction degree corresponding to the first route, and a feature of the first route. For details, refer to the related descriptions of "S1202" above, and the details are not described herein again.

S1406: The first management service provider entity sends a second message to the management service consumer. Correspondingly, the management service consumer receives the second message from the first management service provider entity.

The second message indicates the network resource reservation policy and the first route, and the second message includes the identifier of the network resource reservation policy, the feature of the network resource reservation policy, the first route, the identifier of the first route, the service assurance satisfaction degree corresponding to the first route, and the feature of the first route. For details, refer to the related descriptions of "S1203" above, and the details are not described herein again.

S1407: The first management service provider entity triggers the network resource configuration based on the network resource reservation policy.

When the network resource reservation policy includes one policy, the first management service provider entity may trigger the network resource configuration based on the policy. When the network resource reservation policy includes a plurality of policies, the first management service provider entity may receive, from the management service consumer, a third message indicating a to-be-applied policy (S1406' in FIG. 14), where the to-be-applied policy is a policy selected from the network resource reservation policy; and trigger the network resource configuration based on the to-be-applied policy.

It may be understood that for specific implementations of S1401 to S1407, refer to the related descriptions of S1201 to S1204. Details are not described herein again.

### Scenario 6:

FIG. 15 is a schematic flowchart 8 of a communication method according to an embodiment of this application. The communication method is applicable to the foregoing communication system, and mainly relates to the management service consumer, the first management service provider entity, and the second management service provider entity. In the scenario 6, the management service consumer may request the first management service provider entity to provide a route from a first start point to a first end point, and ensure, based on a network performance requirement, communication service quality during movement along the route. The first management service provider entity may generate a network resource reservation policy and a first route from the first start point to the first end point based on the request. In addition, the first management service provider entity may send the first route and the network resource reservation policy to the management service consumer, and trigger network resource configuration based on the network resource reservation policy.

As shown in FIG. 15, a procedure for the communication method is as follows:
S1501: The management service consumer sends a first message to the first management service provider entity. Correspondingly, the first management service provider entity receives the first message from the management service consumer.

The first message is for requesting to provide the route from the first start point to the first end point, and ensure, based on the network performance requirement, the communication service quality during the movement along the route. In addition, the first message includes information indicating a first duration, information indicating the first start point, information indicating the first end point, a route planning indication, the network performance requirement, and an evaluation granularity requirement.

Optionally, the first message further includes a slice identifier, a policy adjustment parameter, an optimization stop condition, a passing point, a passing region, a forbidden region, and a route preference.

For details about the first message, refer to the related descriptions of "S1201" above, and the details are not described herein again.

S1502: The first management service provider entity generates the network resource reservation policy based on the first message.

S1503: The first management service provider entity sends a second message to the management service consumer. Correspondingly, the management service consumer receives the second message from the first management service provider entity.

The second message indicates the network resource reservation policy and the first route, and the second message includes an identifier of the network resource reservation policy, a feature of the network resource reservation policy, the first route, an identifier of the first route, a service assurance satisfaction degree corresponding to the first route, and a feature of the first route. For details, refer to the related descriptions of "S1203" above, and the details are not described herein again.

S1504: The first management service provider entity triggers network resource configuration based on the network resource reservation policy.

When the network resource reservation policy includes one policy, the first management service provider entity may trigger the network resource configuration based on the policy. When the network resource reservation policy includes a plurality of policies, the first management service provider entity may receive, from the management service consumer, a third message indicating a to-be-applied policy (S1503' in FIG. 15), where the to-be-applied policy is a policy selected from the network resource reservation policy; and trigger the network resource configuration based on the to-be-applied policy.

It may be understood that for specific implementations of S1501 to S1504, refer to the related descriptions of S1201 to S1204 above. Details are not described herein again.

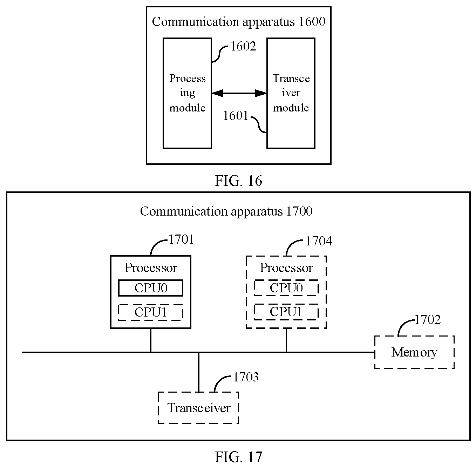

With reference to FIG. 4 to FIG. 15, the foregoing describes in detail the communication methods provided in embodiments of this application. With reference to FIG. 16 and FIG. 17, the following describes in detail communication apparatuses configured to perform the communication methods provided in embodiments of this application.

FIG. 16 is a diagram 1 of a structure of a communication apparatus according to an embodiment of this application. For example, as shown in FIG. 16, the communication apparatus 1600 includes a transceiver module 1601 and a processing module 1602. For ease of description, FIG. 16 shows only main components of the communication apparatus.

In some embodiments, the communication apparatus 1600 may be used in the communication system shown in FIG. 3, and perform a function of the first management service provider entity in the communication method shown in FIG. 4.

The transceiver module 1601 is configured to receive a first message from the management service consumer. The processing module 1602 is configured to: obtain a network resource reservation policy based on the first message, and trigger network resource configuration based on the network resource reservation policy. The first message is for requesting to ensure, based on a network performance requirement, communication service quality during movement along a first route within a first duration, the network resource reservation policy indicates a configuration mode of a reserved network resource, and a network resource configured in the configuration mode is capable of ensuring the communication service quality during the movement along the first route within the first duration.

In a possible design scheme, the first message includes at least one of the following: information indicating the first duration or information indicating the first route.

In a possible design scheme, the first message includes at least one of the following: a route planning indication, the network performance requirement, an evaluation granularity requirement, a slice identifier, a policy adjustment parameter, or an optimization stop condition, where the route planning indication indicates whether a moving route needs to be provided, the evaluation granularity requirement indicates a size of a plurality of grids included in a region that covers a route, the slice identifier indicates a network slice for reserving a network resource, the policy adjustment parameter indicates a parameter to be adjusted during update of a network resource reservation policy, and the optimization stop condition indicates a condition for stopping updating a network resource reservation policy.

In a possible design scheme, the transceiver module 1601 is further configured to send, to the management service consumer based on the network resource reservation policy, a second message indicating the network resource reservation policy.

Optionally, the second message includes at least one of the following: an identifier of the network resource reservation policy, a feature of the network resource reservation policy, or a service assurance satisfaction degree corresponding to the network resource reservation policy, where the service assurance satisfaction degree represents a degree of matching between network performance and the network performance requirement.

Optionally, the transceiver module 1601 is specifically configured to receive, from the management service consumer, a third message indicating a to-be-applied policy, where the to-be-applied policy is a policy selected from the network resource reservation policy. The processing module 1602 is specifically configured to trigger the network resource configuration based on the to-be-applied policy.

In a possible design scheme, the processing module 1602 is specifically configured to obtain the network resource reservation policy from the second management service provider entity based on the first message.

Optionally, the transceiver module 1601 is specifically configured to send a fourth message to the second management service provider entity based on the first message, where the fourth message is for requesting to determine the network resource reservation policy based on the network performance requirement. The transceiver module 1601 is specifically configured to receive a fifth message from the second management service provider entity, where the fifth message indicates the network resource reservation policy.

Further, the fourth message specifically indicates a request for determining, based on the network performance requirement, a network resource reservation policy applicable to at least one network element, a service range of the at least one network element includes a first region, and the first region is a region in which the first route is located.

Further, the fourth message includes at least one of the following: the information indicating the first duration, region information, or information indicating the at least one network element, where the region information indicates a plurality of first grids included in the first region.

Further, the region information includes at least one of the following: respective identifiers of the plurality of first grids, a size of the plurality of first grids, or respective locations of the plurality of first grids.

Further, the fourth message includes at least one of the following: the network performance requirement, the slice identifier, a policy optimization indication, the policy adjustment parameter, or the optimization stop condition, where the slice identifier indicates the network slice for reserving the network resource, the policy optimization indication indicates to optimize the network resource reservation policy, the policy adjustment parameter indicates the parameter to be adjusted during the update of the network resource reservation policy, and the optimization stop condition indicates the condition for stopping updating the network resource reservation policy.

Further, the processing module 1602 is specifically configured to obtain, based on the first message, at least one of the following information: the region information or the information indicating the at least one network element. The transceiver module 1601 is specifically configured to send the fourth message to the second management service provider entity based on the first message and the at least one of the following information.

Further, the fifth message includes at least one of the following: the network resource reservation policy, the identifier of the network resource reservation policy, the feature of the network resource reservation policy, or the service assurance satisfaction degree corresponding to the network resource reservation policy, where the service assurance satisfaction degree represents the degree of matching between the network performance and the network performance requirement.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is caused to perform the function of the first management service provider entity in the method shown in FIG. 4 in the foregoing methods.

It may be understood that the communication apparatus 1600 may be a network device, for example, the first management service provider entity, may be a chip (system) or another part or component that may be disposed in the network device, or may be an apparatus that includes the network device. This is not limited in this application.

In addition, for technical effects of the communication apparatus 1600, refer to the technical effects of the communication method shown in FIG. 4. Details are not described herein again.

In some other embodiments, the communication apparatus 1600 may be used in the communication system shown in FIG. 3, and perform a function of the management service consumer in the method shown in FIG. 4.

The processing module 1602 is configured to control the transceiver module 1601 to send a first message to the first management service provider entity. The transceiver module 1601 is configured to receive, from the first management service provider entity, a second message indicating a network resource reservation policy. The first message is for requesting to ensure, based on a network performance requirement, communication service quality during movement along a first route within a first duration, and the network resource reservation policy indicates a policy that is determined based on the network performance requirement and that is capable of ensuring the communication service resource experienced during the movement along the first route within the first duration.

In a possible design scheme, the first message includes at least one of the following: information indicating the first duration or information indicating the first route.

In a possible design scheme, the first message includes at least one of the following: a route planning indication, the network performance requirement, an evaluation granularity requirement, a slice identifier, a policy adjustment parameter, or an optimization stop condition, where the route planning indication indicates whether a moving route needs to be provided, the evaluation granularity requirement indicates a size of a plurality of grids included in a region that covers a route, the slice identifier indicates a network slice for reserving a network resource, the policy adjustment parameter indicates a parameter to be adjusted during update of a network resource reservation policy, and the optimization stop condition indicates a condition for stopping updating a network resource reservation policy.

In a possible design scheme, the second message includes at least one of the following: an identifier of the network resource reservation policy, a feature of the network resource reservation policy, or a service assurance satisfaction degree corresponding to the network resource reservation policy, where the service assurance satisfaction degree represents a degree of matching between network performance and the network performance requirement.

In a possible design scheme, the transceiver module 1601 is further configured to send, to the first management service provider entity based on the second message, a third message indicating a to-be-applied policy, where the to-be-applied policy is a policy selected from the network resource reservation policy.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is caused to perform the function of the management service consumer in the method shown in FIG. 4 in the foregoing methods.

It may be understood that the communication apparatus 1600 may be a network device, for example, the management service consumer, may be a chip (system) or another part or component that may be disposed in the network device, or may be an apparatus that includes the network device. This is not limited in this application.

In addition, for technical effects of the communication apparatus 1600, refer to the technical effects of the communication method shown in FIG. 4. Details are not described herein again.

In some other embodiments, the transceiver module 1601 is configured to perform receiving and sending functions in the methods shown in FIG. 4 to FIG. 15, and the processing module 1602 is configured to perform a function other than the receiving and sending functions in the methods shown in FIG. 4 to FIG. 15.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is caused to perform a function of the first management service provider entity, the second management service provider entity, or the management service consumer in the methods shown in FIG. 4 to FIG. 15 in the foregoing methods.

It may be understood that the communication apparatus 1600 may be a network device, for example, the first management service provider entity, the second management service provider entity, or the management service consumer, may be a chip (system) or another part or component that may be disposed in the network device, or may be an apparatus that includes the network device. This is not limited in this application.

FIG. 17 is a diagram 2 of a structure of a communication apparatus according to an embodiment of this application. For example, the communication apparatus may be a network device, for example, a first management service provider entity, a second management service provider entity, or a management service consumer, or may be a chip (system) or another part or component that may be disposed in the network device. As shown in FIG. 17, the communication apparatus 1700 may include a processor 1701. Optionally, the communication apparatus 1700 may further include a memory 1702 and/or a transceiver 1703. The processor 1701 is coupled to the memory 1702 and the transceiver 1703, for example, may be connected through a communication bus.

The following specifically describes the components of the communication apparatus 1700 with reference to FIG. 17.

The processor 1701 is a control center of the communication apparatus 1700, and may be one processor, or may be a collective name of a plurality of processing elements. For example, the processor 1701 is one or more central processing units (central processing units, CPUs), may be an application-specific integrated circuit (application-specific integrated circuit, ASIC), or is configured as one or more integrated circuits for implementing embodiments of this application, for example, one or more digital signal processors (digital signal processors, DSPs), or one or more field programmable gate arrays (field programmable gate arrays, FPGAs).

Optionally, the processor 1701 may run or execute a software program stored in the memory 1702, and invoke data stored in the memory 1702, to perform various functions of the communication apparatus 1700, for example, perform the communication methods shown in FIG. 4 to FIG. 15.

During specific implementation, in an embodiment, the processor 1701 may include one or more CPUs, such as a CPU 0 and a CPU 1 shown in FIG. 17.

During specific implementation, in an embodiment, the communication apparatus 1700 may alternatively include a plurality of processors, such as the processor 1701 and a processor 1704 shown in FIG. 17. Each of the processors may be a single-core (single-CPU) processor, or may be a multi-core (multi-CPU) processor. The processor herein may be one or more devices, circuits, and/or processing cores configured to process data (for example, computer program instructions).

The memory 1702 is configured to store a software program for executing the solutions of this application, and the processor 1701 controls the execution. For a specific implementation, refer to the foregoing method embodiments. Details are not described herein again.

Optionally, the memory 1702 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of an instruction or a data structure and that can be accessed by a computer, but is not limited thereto. The memory 1702 may be integrated with the processor 1701; or may exist independently, and is coupled to the processor 1701 through an interface circuit (not shown in FIG. 17) of the communication apparatus 1700. This is not specifically limited in this embodiment of this application.

The transceiver 1703 is configured to communicate with another communication apparatus. For example, the communication apparatus 1700 is a terminal, and the transceiver 1703 may be configured to communicate with a network apparatus or communicate with another terminal apparatus. For another example, the communication apparatus 1700 is a network apparatus, and the transceiver 1703 may be configured to communicate with a terminal or communicate with another network apparatus.

Optionally, the transceiver 1703 may include a receiver and a transmitter (not separately shown in FIG. 17). The receiver is configured to implement a receiving function, and the transmitter is configured to implement a sending function.

Optionally, the transceiver 1703 may be integrated with the processor 1701; or may exist independently, and is coupled to the processor 1701 through an interface circuit (not shown in FIG. 17) of the communication apparatus 1700. This is not specifically limited in this embodiment of this application.

It may be understood that the structure of the communication apparatus 1700 shown in FIG. 17 does not constitute a limitation on the communication apparatus. An actual communication apparatus may include more or fewer components than those shown in the figure, combine some components, or have different component arrangements.

In addition, for technical effects of the communication apparatus 1700, refer to the technical effects of the methods in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. By way of example but not limitative description, a plurality of forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the foregoing embodiments, the foregoing embodiments may be implemented completely or partially in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification generally represents an "or" relationship between associated objects, but may alternatively represent an "and/or" relationship. For details, refer to context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for instructing a computer device (which may be a personal computer, a server, a network apparatus, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a first management service provider entity, a first message from a management service consumer, wherein the first message is for requesting to ensure, based on a network performance requirement, communication service quality during movement along a first route within a first duration;
obtaining, by the first management service provider entity, a network resource reservation policy based on the first message, wherein the network resource reservation policy indicates a configuration mode of a reserved network resource, and a network resource configured in the configuration mode is capable of ensuring the communication service quality during the movement along the first route within the first duration; and
triggering, by the first management service provider entity, network resource configuration based on the network resource reservation policy.

2. The method according to claim 1, wherein the first message comprises at least one of the following: information indicating the first duration or information indicating the first route.

3. The method according to claim 1 or 2, wherein the first message comprises at least one of the following: a route planning indication, the network performance requirement, an evaluation granularity requirement, a slice identifier, a policy adjustment parameter, or an optimization stop condition, wherein the route planning indication indicates whether a moving route needs to be provided, the evaluation granularity requirement indicates a size of a plurality of grids comprised in a region that covers a route, the slice identifier indicates a network slice for reserving a network resource, the policy adjustment parameter indicates a parameter to be adjusted during update of a network resource reservation policy, and the optimization stop condition indicates a condition for stopping updating a network resource reservation policy.

4. The method according to any one of claims 1 to 3, wherein the method further comprises:
sending, by the first management service provider entity to the management service consumer based on the network resource reservation policy, a second message indicating the network resource reservation policy.

5. The method according to claim 4, wherein the second message comprises at least one of the following: an identifier of the network resource reservation policy, a feature of the network resource reservation policy, or a service assurance satisfaction degree corresponding to the network resource reservation policy, wherein the service assurance satisfaction degree represents a degree of matching between network performance and the network performance requirement.

6. The method according to claim 4 or 5, wherein the network resource reservation policy comprises a plurality of policies, and the triggering, by the first management service provider entity, the network resource configuration based on the network resource reservation policy comprises:
receiving, by the first management service provider entity from the management service consumer, a third message indicating a to-be-applied policy, wherein the to-be-applied policy is a policy selected from the network resource reservation policy; and
triggering, by the first management service provider entity, the network resource configuration based on the to-be-applied policy.

7. The method according to any one of claims 1 to 6, wherein the obtaining, by the first management service provider entity, the network resource reservation policy based on the first message comprises:
obtaining, by the first management service provider entity, the network resource reservation policy from a second management service provider entity based on the first message.

8. The method according to claim 7, wherein the obtaining, by the first management service provider entity, the network resource reservation policy from the second management service provider entity based on the first message comprises:
sending, by the first management service provider entity, a fourth message to the second management service provider entity based on the first message, wherein the fourth message is for requesting to determine the network resource reservation policy based on network performance requirement; and
receiving, by the first management service provider entity, a fifth message from the second management service provider entity, wherein the fifth message indicates the network resource reservation policy.

9. The method according to claim 8, wherein the fourth message specifically indicates a request for determining, based on the network performance requirement, a network resource reservation policy applicable to at least one network element, a service range of the at least one network element comprises a first region, and the first region is a region in which the first route is located.

10. The method according to claim 9, wherein the fourth message comprises at least one of the following: the information indicating the first duration, region information, or information indicating the at least one network element, wherein the region information indicates a plurality of first grids comprised in the first region.

11. The method according to claim 10, wherein the region information comprises at least one of the following: respective identifiers of the plurality of first grids, a size of the plurality of first grids, or respective locations of the plurality of first grids.

12. The method according to any one of claims 8 to 11, wherein the fourth message comprises at least one of the following: the network performance requirement, the slice identifier, a policy optimization indication, the policy adjustment parameter, or the optimization stop condition, wherein the slice identifier indicates a network slice for reserving a network resource, the policy optimization indication indicates to optimize a network resource reservation policy, the policy adjustment parameter indicates a parameter to be adjusted during update of a network resource reservation policy, and the optimization stop condition indicates a condition for stopping updating a network resource reservation policy.

13. The method according to any one of claims 8 to 12, wherein the fifth message comprises at least one of the following: the network resource reservation policy, the identifier of the network resource reservation policy, the feature of the network resource reservation policy, or the service assurance satisfaction degree corresponding to the network resource reservation policy, wherein the service assurance satisfaction degree represents the degree of matching between the network performance and the network performance requirement.

14. A communication method, wherein the method comprises:
sending, by a management service consumer, a first message to a first management service provider entity, wherein the first message is for requesting to ensure, based on a network performance requirement, communication service quality during movement along a first route within a first duration; and
receiving, by the management service consumer from the first management service provider entity, a second message indicating a network resource reservation policy, wherein the network resource reservation policy indicates a policy that is determined based on the network performance requirement and that is capable of ensuring the communication service resource during the movement along the first route within the first duration.

15. The method according to claim 14, wherein the first message comprises at least one of the following: information indicating the first duration or information indicating the first route.

16. The method according to claim 14 or 15, wherein the first message comprises at least one of the following: a route planning indication, the network performance requirement, an evaluation granularity requirement, a slice identifier, a policy adjustment parameter, or an optimization stop condition, wherein the route planning indication indicates whether a moving route needs to be provided, the evaluation granularity requirement indicates a size of a plurality of grids comprised in a region that covers a route, the slice identifier indicates a network slice for reserving a network resource, the policy adjustment parameter indicates a parameter to be adjusted during update of a network resource reservation policy, and the optimization stop condition indicates a condition for stopping updating a network resource reservation policy.

17. The method according to any one of claims 14 to 16, wherein the second message comprises at least one of the following: an identifier of the network resource reservation policy, a feature of the network resource reservation policy, or a service assurance satisfaction degree corresponding to the network resource reservation policy, wherein the service assurance satisfaction degree represents a degree of matching between network performance and the network performance requirement.

18. The method according to any one of claims 14 to 17, wherein the network resource reservation policy comprises a plurality of policies, and the method further comprises:
sending, by the management service consumer to the first management service provider entity based on the second message, a third message indicating a to-be-applied policy, wherein the to-be-applied policy is a policy selected from the network resource reservation policy.

19. A communication apparatus, wherein the apparatus comprises a module configured to perform the method according to any one of claims 1 to 18.

20. A communication apparatus, wherein the communication apparatus comprises a processor and a memory, wherein the memory is configured to store computer instructions; and when the processor executes the instructions, the communication apparatus is caused to perform the method according to any one of claims 1 to 18.

21. A communication system, comprising a first management service provider entity configured to perform the method according to any one of claims 1 to 13 and a management service consumer configured to perform the method according to any one of claims 14 to 18.

22. A communication chip, storing instructions, wherein when the chip runs on a communication device, the method according to any one of claims 1 to 18 is implemented.

23. A computer-readable storage medium, wherein the computer-readable storage medium comprises a computer program or instructions; and when the computer program or the instructions are run on a computer, the computer is caused to perform the method according to any one of claims 1 to 18.

24. A computer program product, wherein the computer program product comprises a computer program or instructions; and when the computer program or the instructions are run on a communication apparatus, the method according to any one of claims 1 to 18 is performed.
